(19) Europäisches Patentamt
European Patent Office
Office européen des brevets

(11) **EP 2 946 865 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **15164833.4**

(22) Anmeldetag: **23.04.2015**

(51) Int Cl.:
*B23F 23/00* (2006.01)  *B23F 23/12* (2006.01)

(54) **VERFAHREN ZUR LAGEBESTIMMUNG DER EVOLVENTEN BEI VERZAHNUNGEN**

METHOD FOR DETERMINING THE POSITION OF INVOLUTE GEARING IN GEAR TEETH

PROCÉDÉ DE DÉTERMINATION DE POSITION DE DÉVELOPPANTES POUR DES ENGRENAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2014 DE 102014007646**

(43) Veröffentlichungstag der Anmeldung:
**25.11.2015 Patentblatt 2015/48**

(73) Patentinhaber: **Liebherr-Verzahntechnik GmbH 87437 Kempten (DE)**

(72) Erfinder: **Würfel, Robert 87499 Wildpoldsried (DE)**

(74) Vertreter: **Laufhütte, Dieter Lorenz Seidler Gossel Rechtsanwälte Patentanwälte Partnerschaft mbB Widenmayerstraße 23 80538 München (DE)**

(56) Entgegenhaltungen:
DD-A5- 286 530        DE-A1- 4 330 931
DE-A1-102009 008 120    DE-B3-102011 077 231

**Beschreibung**

Die Erfindung betrifft ein Verfahren zur Lagebestimmung der Evolventen eines Werkstückes, vorzugsweise bei einem Zahnrad mit konischer und/oder asymmetrischer Evolventenverzahnung gemäß Anspruch 1 sowie ein Verfahren zum lageorientierten Fertigen eines Werkstückes gemäß Anspruch 12.

Bei symmetrischen Stirnrädern ist die Bestimmung der Lage der Evolventen meist recht unkompliziert. Es wird die Position der rechten und linken Flanke an einem Punkt ermittelt und anschließend der Weg zwischen diesen Punkten halbiert. Dieser errechnete Punkt liegt auf der Winkelhalbierenden in der Mitte der Zahnlücke. Zweck dieses Verfahrens ist die Ermittlung der optimalen Lückenmitte.

Zur Ermittlung der Zahnflankenpositionen gibt es verschiedene Verfahren nach dem Stand der Technik, je nachdem ob die Flankenposition berührungslos oder tastend erkannt werden soll. Bei tastenden Verfahren werden Taster eingesetzt oder es wird mit dem jeweiligen Bearbeitungswerkzeug die Zahnflanke berührt und über verschiedene Erkennungsmechanismen der Kontakt zwischen Werkzeug und Werkstück festgestellt.

Je nachdem ob es sich bei dem Werkzeug um ein scheibenförmiges oder schneckenförmiges Werkzeug handelt, gibt es verschiedene Verfahren zu Annäherung zwischen dem Werkzeug und der Zahnflanke. Bei scheibenförmigen Werkzeugen reicht es aus, wenn z.B. das Werkstück so lange im oder gegen den Uhrzeigersinn verdreht wird, bis der Kontakt zwischen der Zahnflanke des Werkstückes und dem Werkzeug zustande kommt. Alternativ dazu kann das Werkzeug parallel zu seiner Achse verschoben werden.

Bei schnecken- oder zahnradförmigen Werkzeugen wird häufig das Werkzeug so lange gedreht, bis ein Kontakt erkannt wird. Auch hier kann zusätzlich das Werkstück verdreht werden oder das Werkzeug parallel zu seiner Achse verschoben werden. Da die Achsen alle über Mess-Systeme verfügen, lassen sich die Achspositionen beim Kontakt zwischen Werkstück und Werkzeug exakt bestimmen und die jeweiligen Positionen zueinander berechnen.

Bei schneckenförmigen Werkzeugen ist zu berücksichtigen, ob das Werkzeug eine geschlossenen Hüllschnittkontur, wie z.B. bei einer Schleifschnecke, aufweist oder ob es sich z.B. um einen Wälzfräser handelt, bei dem nur die Werkzeugschneide die für den Prozess relevante Kontur ausweist. Zwischen diesen Schneiden liegt dann eine davon abweichende Kontur vor. Kommt der Kontakt an so einer Fläche zwischen Werkstück und Werkzeug zustande, ist das Messergebnis nur bedingt verwendbar.

Bei den herkömmlichen Stirnradverzahnungen, bei denen die Zahnflanken symmetrisch sind, ist diese Positionsbestimmung für normale Bearbeitungsoperationen ausreichend. Unterscheiden sich die Zahnflanken hingegen zwischen rechter und linker Zahnflanke deutlich und/oder sind die Zahnflanken dazu auch noch konisch über der Zahnbreite ausgeführt, reicht eine Mittelwertbildung zwischen zwei Messpunkten nicht mehr aus, um die Lage der Evolventen zu beschreiben bzw. es ergibt sich daraus ggf. eine falsche Position.

Diese Positionierung ist aber notwendig, um vorverzahnte Werkstücke weiter bearbeiten zu können. Dies ist zum einen dann der Fall, wenn Werkstücke im weichen Zustand vorverzahnt wurden und nun nach einer Wärmebehandlung im harten Zustand fertig gestellt werden sollen, wie dies zum Beispiel bei einem Verzahnungsschleif- und/oder Verzahnungshonprozess der Fall ist.

Bei der Nachbearbeitung im gehärteten Zustand ist neben der Lage der Verzahnung häufig auch noch die Form der Verzüge über der Zahnbreite bedingt durch den Wärmebehandlungsprozess relevant. In diesem Fall muss die Lage der Verzahnung in mehreren Ebenen in Relation zur Zahnbreite bestimmt werden. Dies ist vor allem bei stark konischen und/oder asymmetrischen Verzahnungen nicht ganz einfach.

Bei Verzahnungsschleif- und Verzahnungshonverfahren wird vor allem auch versucht, das Bearbeitungsaufmaß schon bei der Weichbearbeitung so gering wie notwendig zu halten. Hier ist nach der Wärmebehandlung zusätzlich noch wichtig, neben den Härteverzügen auch die Aufmaßverteilung über dem Umfang der Verzahnung auszumitteln, damit nicht an manchen Stellen der Verzahnung zu viel Material abgetragen wird und anschließend die Zahnflanke in diesen Bereichen wieder weich ist. Dies könnte zu Getriebeschäden im zusammengebauten Getriebe unter Arbeitsbedingungen führen und damit zu einem vorzeitigen Ende der Getriebelebensdauer.

Weiterhin gibt es Anwendungen, bei denen eine zweite Verzahnung abhängig von einer ersten Verzahnung bearbeitet oder hergestellt werden muss. Auch in diesem Fall ist eine exakte Kenntnis der Lage der ersten Verzahnung absolut notwendig.

Eine weitere Anwendung ist die Bearbeitung von vorgeschmiedeten oder gesinterten Rohlingen. Auch diese werden üblicherweise nachbearbeitet, um die Verzahngenauigkeit zu erhöhen. Dafür muss ebenfalls die Position der Zahnlücken bzw. der nachzuarbeitenden Zähne in ausreichender Genauigkeit bekannt sein, damit das Bearbeitungsaufmaß in der Vorbearbeitung möglichst gering gewählt werden kann.

Die Aufgabe der vorliegenden Erfindung beschäftigt sich mit der Weiterentwicklung bisheriger Messverfahren zur Lagebestimmung der Evolventen eines Zahnrades, so dass diese insbesondere auch bei Zahnrädern mit asymmetrischer und/oder konischer Flankenform hinreichend genaue Messergebnisse liefern.

Gelöst wird diese Aufgabe durch das Verfahren gemäß den Merkmalen des Anspruchs 1. Vorteilhafte Ausgestaltungen des Verfahrens sind Gegenstand der sich an den Hauptanspruch anschließenden abhängigen Ansprüche.

Gemäß Anspruch 1 wird ein Verfahren zur Lagerbestimmung der Evolventen eines vorverzahnten Werkstückes innerhalb einer Verzahnmaschine unter Verwendung eines verzahnten Werkzeuges vorgeschlagen.

Die aus dem Stand der Technik bekannten Verfahren zum Einmitten von Verzahnungen sind für symmetrisch verzahnte Werkstücke geeignet. Sobald ein Werkstück bzw. Werkzeug mit asymmetrischer oder konischer Flankenform eingesetzt wird, liefern derartige Verfahren fehlerhafte Ergebnisse. Erfindungsgemäß wird daher ein weiterentwickeltes Verfahren vorgeschlagen, das die geometrischen Eigenschaften asymmetrischer und/oder konischer Verzahnungen berücksichtigt und darauf basierend die Lagebestimmung der Evolventen berechnet.

Bei dem erfindungsgemäßen Verfahren bilden Werkzeug und Werkstück ein Schraubwälzgetriebe zweier Außenverzahnungen bzw. einer Außen- und Innenverzahnung. Werkstück und/oder Werkzeug können sowohl eine asymmetrische zylindrische als auch eine konische Verzahnung (Beveloid-Verzahnung) aufweisen. Bei dem Werkstück handelt es sich vorzugsweise um ein Zahnrad mit konischer und/oder asymmetrischer Stirnradverzahnung.

Mögliche Herstellungsverfahren, bei denen vorab das erfindungsgemäße Verfahren zur Lagebestimmung der Evolventen eingesetzt werden kann, sind beispielsweise das Wälzschleifen, Wälzfräsen, Schälwälzfräsen, Schaben, Wälzschälen und innen und außen Honen, wobei bei all diesen Verfahren sowohl zylindrische als auch konische Werkzeuge eingesetzt werden können.

Das erfindungsgemäße Verfahren dient zwar vornehmlich zur Lagebestimmung der Evolventen bei asymmetrischen und/oder konischen Verzahnungen, jedoch kann das Verfahren ohne weiteres auch bei symmetrischen zylindrischen Verzahnungen von Werkstück und/oder Werkzeug eingesetzt werden. Der Gegenstand der Erfindung soll daher nicht auf die Durchführung bei asymmetrischen zylindrischen und/oder konischen Verzahnungen beschränkt sein.

Weiterhin ist festzuhalten, dass die Durchführung der erfindungsgemäßen Verfahrensschritte auf einer Wechselwirkung zwischen Werkzeug und Werkstück basiert. Mit dem Verfahren lässt sich die Lage der Evolventen sowohl am Werkstück als auch alternativ am Werkzeug bestimmen. Der Einfachheit halber wird im Folgenden nur von der Lagebestimmung am Werkstück gesprochen.

Der erfindungsgemäße Kerngedanke basiert auf der Wechselwirkung der beiden Verzahnungen. Vor diesem Hintergrund besteht auch die Möglichkeit, Werkstück oder Werkzeug durch ein sogenanntes Masterrad zu ersetzen, dessen Abmessungen bekannt sind und das zur Lagebestimmung der Evolventen des Zahnradpaares (Werkstück oder Werkzeug) dient.

Das erfindungsgemäße Verfahren umfasst die folgenden Verfahrensschritte:

a. Erzeugen einer ersten Relativbewegung zwischen Werkstück und Werkzeug, Detektieren der resultierenden ersten Berührung zwischen einer ersten Zahnflanke, vorzugsweise linken Zahnflanke, des Werkzeuges und einer ersten Zahnflanke, vorzugsweise linken Zahnflanke, des Werkstückes und Erfassen eines ersten Koordinatensatzes zur Darstellung der Relativbewegung von Werkstück und Werkzeug,

b. Erzeugen einer zweiten Relativbewegung zwischen Werkstück und Werkzeug, Detektieren der resultierenden zweiten Berührung zwischen einer zweiten Zahnflanke, vorzugsweise rechten Zahnflanke, des Werkzeuges und einer zweiten Zahnflanke, vorzugsweise rechten Zahnflanke, des Werkstückes und Erfassen eines zweiten Koordinatensatzes zur Darstellung der Relativbewegung von Werkstück und Werkzeug,

c. Bestimmung der Drehwinkel, der Vorschübe, des Achsabstandes und des Achskreuzwinkels von Werkzeug und Werkstück basierend auf dem ersten und zweiten Koordinatensatz und Berechnung der Lage der Evolventen auf Grundlage der Drehwinkel, der Vorschübe, des Achsabstandes und des Achskreuzwinkels.

Zur Detektion der Berührung zwischen zwei Zahnflankenpaaren können unterschiedliche Verfahren eingesetzt werden, wie sie bereits aus dem Stand der Technik bekannt sind. Beispielsweise kann die Erkennung einer Berührung durch Messen mindestens einer Motorgröße der Stellantriebe der Verzahnmaschine erfolgen. Als geeignete Motorgrößen erweisen sich beispielsweise der Motorstrom, die Motorspannung, das Motordrehmoment, die Motordrehzahl oder die Motorwirkleistung eines der Stellantriebe der Verzahnmaschine. Die Berührung lässt sich beispielsweise am gemessenen Signalverlauf wenigstens einer der genannten Motorgröße feststellen.

Für die Durchführung des erfindungsgemäßen Verfahren spielt es keine Rolle, durch welche Maschinenachsen des Werkzeuges und/oder Werkstückes die Relativbewegung erzeugt wird, um den Kontakt zwischen beiden Verzahnungen zu erreichen. Theoretisch können alle verfügbaren Maschinenachsen gemeinsam genutzt werden, nur ein Teil der verfügbaren Achsen oder nur eine einzige allein. Essentiell für die Durchführung des Verfahrens ist lediglich, dass sich die beiden Verzahnungen von Werkstück und Werkzeug auf ihren Evolventenflächen berühren. Sofern beide Verzahnungen miteinander kämmen, kann diese Berührung ohne weiteres stattfinden, während das Schraubwälzgetriebe wälzgekoppelt dreht und der Kontakt durch Aufbrechen der Kopplung mit einer beliebigen dazu geeigneten Achse erzielt wird.

Das erfindungsgemäße Verfahren ist vorzugsweise jedoch auch dann ausführbar, wenn die Verzahnungen von Werkstück und Werkzeug nicht miteinander kämmen. In diesem Fall ist ein wälzgekoppeltes Drehen des Getriebes nur um kleine Winkel möglich, da ansonsten Kollisionen mit anderen Zähnen drohen. Die Berührung muss somit quasi im Stillstand stattfinden.

Mit Hilfe der aufgenommenen Koordinatensätze für die Berührung des linken und rechten Zahnflankenpaares lassen sich Positionsgrößen zur Beschreibung der Relativlage von Werkstück und Werkzeug im Moment der Berührung bestimmen. Die Positionsgrößen bilden vorzugsweise sämtliche Freiheitsgrade des in der Maschine eingespannten Werkzeuges und Werkstückes ab. Als Positionsgrößen zählen der Drehwinkel von Werkstück und Werkzeug, der Vorschub, beispielsweise Axialvorschub, von Werkstück und Werkzeug, sowie deren Achsabstand und deren Achskreuzwinkel. Diese Positionsgrößen werden sowohl für die Berührung des linken als auch rechten Zahnflankenpaares bestimmt. In Kenntnis dieser Größen kann dann die Lage der Evolvente auf der rechten und linken Zahnflanke berechnet werden, d.h. der Grundlückenhalbwinkel für die rechte und linke Flanke bei definierter Referenzrichtung.

Für eine asymmetrische Verzahnung ist nur die Summe aus den beiden Grundlückenhalbwinkel der linken und rechten Flanke eindeutig. Die Werte für die jeweiligen Winkel hängen von der beliebig wählbaren Referenzrichtung der Lücke in einer beliebig wählbaren Referenz-Stirnschnittebene ab.

Voraussetzung für die direkte Berechnung des linken und/oder rechten Grundlückenhalbwinkels ist, dass die Lagen der linken und rechten Evolvente des Werkzeuges bekannt sind.

Voraussetzung für die direkte Berechnung der Differenz der Grundlückenhalbwinkel ($\Delta\eta_b$) ist, dass die Differenz der Grundlückenhalbwinkel des Werkzeuges bekannt ist.
Die relative Lage der beiden Verzahnungen zueinander kann vorzugsweise auf Grundlage sogenannter kinematischer Ketten beschrieben werden, aus denen sich die oben genannten Positionsgrößen ergeben. Je nach Verzahnungstyp des Werkstückes und/oder Werkzeuges existieren abweichende kinematische Ketten. Insbesondere bilden derartige kinematische Ketten alle sechs räumlichen Freiheitsgrade des Werkstückes und/oder Werkzeuges ab.

Als erster und/oder zweiter Koordinatensatz dienen Größen, die die Lage und Position der einzelnen Maschinenachsen beschreiben. Entsprechende Meßgrößen werden nach jeder Berührung gespeichert. Die physikalischen Maschinenachsen der Verzahnmaschine fallen jedoch nicht notwendigerweise auf die Freiheitsgrade der kinematischen Ketten. Für den Fall, dass nicht alle Freiheitsgrade durch Maschinenachsen abgebildet werden können, ist es vorteilhaft, wenn durch Gleichsetzen der passenden kinematischen Kette mit einer Transformation der erfassten Maschinenkoordinaten die gewünschten Positionsgrößen ermittelbar sind. Insbesondere ist es in diesem Zusammenhang denkbar, dass die Drehwinkel, die Vorschübe bzw. Axialvorschübe, der Achsabstand und der Achskreuzwinkel durch Gleichsetzen einer kinematischen Kette mit der Transformation der aufgenommenen Koordinatensätze bestimmt werden.

Voraussetzung für die direkte Berechnung des linken und rechten Grundlückenhalbwinkels ist, dass die Lagen der linken und rechten Evolvente des Zahnradpaares, d. h. des Werkzeuges bekannt sind. Für den umgekehrten Fall zur Vermessung des Werkzeuges müssen dann die Lagen der linken und rechten Evolventen des Werkstückes bekannt sein.

Zur Berechnung der relativen Lage der Evolventen der linken und rechten Zahnflanke des Werkstückes reicht es aus, wenn die Summe aus dem linken und rechten Grundlückenhalbwinkels des Werkzeuges bekannt ist, d. h. die Zahndicke der Werkzeugzähne bekannt ist. Diese Information genügt, um die Summe der Grundlückenhalbwinkel des Werkstückes zu berechnen, d.h. die Zahndicke des Werkstückzahnes.

Es besteht die Gefahr, dass das Ergebnis der Lagebestimmung der Evolventen verfälscht wird, wenn eine oder beide der Verzahnungen von Werkstück oder Werkzeug modifiziert sind. Derartige Modifikationen können beispielsweise beim Werkstück durch den Vorverzahnprozess, durch Härteverzüge und/oder durch vorangegangene Bearbeitungschritte/-hübe mit modifizierten Werkzeugen auftreten. Bei Werkzeugen treten diese beispielsweise durch Verschleiß oder Fertigungsfehler auf und/oder sind bewusst in das Werkzeug hineingelegt, um gezielt Modifikationen auf dem Werkstück zu erzeugen. Sofern diese Modifikationen bereits bekannt sind können diese bei der Lagebestimmung der Evolventen berücksichtigt werden. Die Korrektur kann beispielsweise auf beide Verzahnungen als auch nur auf eine Verzahnung angewandt werden.

In einer vorteilhaften Ausgestaltung der Erfindung besteht die Möglichkeit, dass die berechnete Lage der Evolventen dazu verwendet wird, dass Werkzeug für den nachfolgenden Verzahnprozess gegenüber dem Werkstück einzumitten. Dieser Prozess war automatisiert bisher nur für symmetrische zylindrische Verzahnungen möglich. Auf Grundlage des erfindungsgemäßen Verfahrens lässt sich der Einmittprozess auch vollständig automatisiert in der Verzahnmaschine bei asymmetrischen zylindrischen und/oder konischen Verzahnungen vornehmen.

Bei dem erfindungsgemäßen Verfahren wird es als ausreichend erachtet, genau eine linke und eine rechte Flanke zu kontaktieren. Bereits nach einem Messdurchgang lässt sich direkt die Lage der Evolventen berechnen. Um Einflüsse durch Messungenauigkeiten oder Profilabweichungen zu reduzieren, kann es sinnvoll sein, die Messungen mit identischen Berührpunkten und/oder mit abweichenden Berührpunkten, d. h. mit anderen Achsstellungen und/oder an anderen Zahnlücken/Zähnen/Gängen des Werkzeugs und/oder des Werkstücks, zu wiederholen und die Messwerte zur Reduzierung von Messungenauigkeiten statistisch auswerten. Alternativ oder zusätzlich kann die Vielzahl an Messwiederholungen auch für eine Aufmaßanalyse und/oder eine Profil-/Flankenmessung und/oder eine Teilungsmessung und/oder eine Zahndickenmessung verwendet werden.

Für das Einmitten kann beispielsweise die vorangegangene Aufmaßanalyse Berücksichtigung finden, um das Werkzeug derart für die nachfolgende Verzahnbearbeitung einzumitten, sodass der Abtrag auf der linken und rechten Flanke des Werkstückes in Normalenrichtung identisch bzw. nahezu identisch ist. Als annähernd identisch wird ein Abtragsverhältnis von linker und rechter Flankenseite von etwa 40 zu 60 % oder weniger erachtet. Möglich ist es zudem auch, das Abtragsverhältnis von linker und rechter gezielt beliebig einzustellen.

Das erfindungsgemäße Verfahren ist sowohl für Werkzeuge mit undefinierter Schneide, d. h. für Werkstücke bei denen die Hüllverzahnung der Geometrie des Werkzeuges entspricht, anwendbar als auch für Werkzeuge mit definierter Schneide mit von der Geometrie des Werkzeuges abweichender Hüllverzahnung. Ein Beispiel für Werkzeuge mit undefinierter Schneide ist beispielsweise eine Schleifschnecke, etc. Demgegenüber stellt ein Wälzfräser ein Werkzeug mit definierter Schneide dar.

Wälzfräser werden daher häufig extern vorvermessen, um eine Information darüber zu erhalten, wo die Werkzeugschneiden relativ auf dem Wälzfräserumfang und zu einer Referenzfläche an der Werkzeugaufnahme liegen. Für den erfindungsgemäßen Messvorgang kann der Wälzfräser dann positioniert eingesetzt werden und gezielt ein Kontakt zwischen der Werkzeugschneide und dem Werkstück zur Lagebestimmung der Evolventen erreicht werden. Für die Verfahrensdurchführung muss also sichergestellt sein, dass die Berührpunkte zwischen Werkstück und Werkzeug auf der Werkzeugschneide auftreten. Diese Voraussetzung wird beispielsweise dadurch sichergestellt, dass vorab Bewegungsachsen des Werkzeuges und/oder des Werkstücks, vorzugsweise der Drehwinkel und/oder der Vorschub des Werkzeuges und/oder des Werkstückes, in Kenntnis der Lage ein oder mehrerer Stollen des Werkzeuges vorab ausgerichtet werden, sodass der oder die Berührungspunkte zwischen Werkstück und Werkzeug im Bereich einer definierten Schneide, d. h. auf der Hüllverzahnung des Werkzeuges liegen.

Problematisch kann die Verfahrensdurchführung insbesondere bei der Lagebestimmung bzw. beim Einmitten von Werkzeugen mit schmalen Verzahnungen und ungünstigen Kontaktbedingungen sein. Ist beispielsweise eine der Verzahnungen so schmal, dass der theoretische Abstand der Berührpunkte in z-Richtung auf linker und rechter Flanke größer ist als die Breite des Zahnes, so können die Berührpunkte auf linker und rechter Flanke auf der schmalen Verzahnungen nicht auf der Evolvente stattfinden. Es erfolgt eine Berührung mit der Kante der Verzahnung und ein präzises Einmitten ist nicht mehr möglich. Für diesen Spezialfall wird beim erfindungsgemäßen Verfahren vorgeschlagen, zwischen den Berührungen auf linker und rechter Flanke entweder mehr als eine der Achsen für den Drehwinkel und den Vorschub von Werkzeug und/oder Werkzeug zu verfahren oder zusätzlich zu einer dieser genannten Achsen ein Schwenkbewegung zur Änderung des Achskreuzwinkels auszuführen.

Das in dieser Erfindung beschriebene Verfahren zur Bestimmung der Lage der Evolventen eines Werkstückes wird nicht immer für jedes Werkstück eines Typs vor der Bearbeitung durchgeführt. Insbesondere in Serienproduktionen wird es üblicherweise für ein Werkstück eines Typs einmal oder wenige Male durchgeführt. Mit dem Ergebnis dieser Lagebestimmung kann dann gemäß einer bevorzugten Ausgestaltung der Erfindung ein Einfädelsensor angelernt werden. Solche Einfädelsensoren können im Allgemeinen nicht die absolute Lage des Werkstücks bestimmen, sondern nur die Lage relativ zu einer Referenzlage, was ein solches Anlernen nötig macht. Dazu wird vorzugsweise ein Werkstück, dessen Lage, d.h. die Lage der Evolventen, mittels des Verfahrens exakt bestimmt wird, mit einem Einfädelsensor vermessen und die aktuelle Lage als Referenzlage abgespeichert. Mit Hilfe eines so angelernten Einfädelsensors ist es dann möglich, alle weiteren Werkstücke in dieselbe Lage zu bringen, bzw. ihre Lage relativ zur Referenzlage und damit auch absolut zu bestimmen.

Die Erfindung betrifft des Weiteren ein Verfahren gemäß Anspruch 12 zum lageorientierten Fertigen eines Werkstückes auf einer Verzahnmaschine, wobei ausgehend von einer separaten Soll-Vorgabe des rechten und/oder linken Grundlückenhalbwinkels für das zu fertigende Werkstück bezüglich einer Referenzrichtung ein oder mehrere Sollwerte für den oder die Drehwinkel und/oder den oder die Vorschübe des Werkzeuges und/oder des Werkstückes und/oder für den Achskreuzwinkel und/oder Achsabstand der beiden Verzahnungen bestimmt werden. Denkbar ist es, dass die Berechnungsvorschriften zur Berechnung der Grundlückenhalbwinkels gemäß dem vorangehend beschriebenen erfindungsgemäßen Verfahren zur Lagebestimmung der Evolventen umgekehrt werden, um ausgehend von einer vorgegebenen Solllage der Evolventen entsprechende Stellbewegungen für die Verzahnbearbeitung zu berechnen. Beispielsweise kann auf Grundlage vordefinierter Grundlückenhalbwinkel für die gewünschte Evolventenform des Werkstückes ein entsprechender Sollwert für den oder die Drehwinkel des Werkzeuges/Werkstückes und/oder den oder die Vorschübe des Werkzeuges/Werkstückes errechnet werden. Eine entsprechende Betätigung der Maschinenachsen führt dann während der Verzahnbewegung zu der gewünschten Evolventenform des Werkstückes.

Die Referenzrichtung für die Grundlückenhalbwinkel kann vorzugsweise durch Messen mit einem Messtaster bestimmt werden. Idealerweise erfolgt die Berechnung des oder der Sollwerte für den oder die Drehwinkel, den oder die Vorschübe, den Achsabstand und/oder den Achskreuzwinkel mittels einer kinematischer Ketten, die die relative Lage zwischen Werkstück und Werkzeug beschreiben. Das erfindungsgemäße Verfahren zum lageorientierten Fertigen lässt sich vorzugsweise auch in Kombination mit dem Verfahren zur Lagebestimmung der Evolventen ausführen.

Die Erfindung betrifft neben dem erfindungsgemäßen Verfahren zusätzlich eine Verzahnmaschine mit einer CNC-Steuerung, wobei die CNC-Steuerung entsprechende Programmvorschriften zur Durchführung des erfindungsgemäßen Verfahrens zur Lagebestimmung der Evolventen und/oder des erfindungsgemäßen Verfahrens zum lageorienterten Fertigen bzw. einer vorteilhaften Ausgestaltung dieser erfindungsgemäßen Verfahren aufweist. Zusätzlich umfasst die Verzahnmaschine geeignete Maschinenachsen zur Ausführung der notwendigen Relativbewegung zwischen Werkstück und Werkzeug sowie entsprechende Sensoren oder entsprechende Detektionsmittel, um die Achsänderungen präzise zu bestimmen und den Moment des Kontaktes zwischen Werkstück und Werkzeug detektieren zu können.

Die Vorteile und Eigenschaften der erfindungsgemäßen Verzahnmaschine entsprechen offensichtlich denen der entsprechenden erfindungsgemäßen Verfahren, weshalb an dieser Stelle auf eine wiederholende Beschreibung verzichtet wird.

Weitere Vorteile und Eigenschaften der Erfindung werden im Folgenden anhand mehrerer Figurendarstellungen näher erläutert. Es zeigen:

Figur 1: eine schematische Darstellung der zu vermessenden Verzahnung mit eingezeichneten Grundlückenhalbwinkeln,

Figur 2: die Darstellung gemäß Figur 1 mit modifizierter Evolvente,

Figur 3: ein w-b-Diagramm zur Verdeutlichung der Schneidkanten eines Werkzeuges mit definierter Schneidkante,

Figur 4: das w-b-Diagramm der Figur 3 mit verschobener Kontaktlinie,

Figur 5: eine Darstellung zweier Verzahnungen in einem Schraubwälzgetriebe,

Figur 6: eine Darstellung einer konischen Verzahnung mit einer sie generierenden Zahnstange,

Figur 7: eine Darstellung einer rechten evolventischen Flanke und der sie generierenden Zahnstange und

Figur 8: beispielhaft, schematisch eine Verzahnmaschine zur Anwendung des Verfahrens.

Das erfindungsgemäße Verfahren zur Vermessung eines Zahnrades soll im Folgenden detailliert beschrieben werden. Insbesondere werden bei dem erfindungsgemäßen Verfahren die geometrischen Eigenschaften asymmetrischer und/oder konischer Verzahnungen berücksichtigt. Die Berücksichtigung dieser Eigenschaften in Verbindung mit einer definierten Berechnungsvorschrift erlaubt die Berechnung der Lage der Evolventen auf der linken und rechten Zahnflanke eines zu vermessenden Zahnrades. Das Verfahren lässt sich zudem zur einfachen Aufmaß-Bestimmung eines Werkstückes mit einem Werkzeug, einer lageabhängigen Bearbeiten von Verzahnungen sowie zum Einmitten von Verzahnungen und Werkzeugen nutzen.

Bei dem erfindungsgemäßen Verfahren bilden Werkzeug und Werkstück ein Schraubwälzgetriebe zweier Außenverzahnungen bzw. einer Außen- und Innenverzahnung. Werkstück und/oder Werkzeug können sowohl eine asymmetrische zylindrische als auch eine konische Verzahnung (Beveloid-Verzahnung) aufweisen. Bei dem Werkstück handelt es sich vorzugsweise um ein Zahnrad mit konischer und/oder asymmetrischer Evolventenverzahnung.

Mögliche Herstellungsverfahren, bei denen vorab das erfindungsgemäße Verfahren zur Lagebestimmung der Evolventen eingesetzt werden kann, sind beispielsweise das Wälzschleifen, Wälzfräsen, Schälwälzfräsen, Schaben, Wälzschälen und Innen- und Außenhonen.

Das Verfahren eignet sich zur Ausführung auf einer CNC-Verzahnmaschine, die die notwendigen Maschinenachsen zur Ausführung der Relativbewegungen zwischen dem eingespannten Werkstück und dem aufgenommenen Werkzeug bereitstellt. Gleichzeitig weist die Bearbeitungsmaschine entsprechende Sensoren zur Messung der Achspositionen und zur Speicherung entsprechender Koordinaten auf. Vorab sollen zunächst die mathematischen Zusammenhänge für die Verfahrensdurchführung näher beleuchtet werden.

Allgemeines:

Alle Größen, die für linke und rechte Flanken eines Zahnrades unterschiedlich sind, werden mit dem Index F versehen. Dabei kann der Index F den Wert l für die linke Zahnflanke und den Wert r für die rechte Zahnflanke annehmen. Gleichungen, die Größen mit dem Index F enthalten, gelten für beide Flanken gleichermaßen.

Mögliche Evolventenverzahnungen werden in die folgenden vier Klassen eingeteilt, wobei $r_b$ den Radius des Grundkreiszylinders des Zahnrades und $\beta_b$ den Grundschrägungswinkel der Evolvente darstellt. Die Eigenschaften dieser Evolvententypen können mit den folgenden Gleichungen beschrieben werden.

Typ 1: Herkömmliche zylindrische symmetrische Verzahnungen

$$r_b := r_{br} = r_{bl} \text{ und}$$

$$\beta_b := \beta_{br} = \beta_{bl}$$

Typ 2: Zylindrische asymmetrische Verzahnungen
$r_{br} \neq r_{bl}$ und

$$\frac{\tan \beta_{br}}{r_{br}} = \frac{\tan \beta_{bl}}{r_{bl}}$$

Typ 3: Symmetrische Beveloids, d.h. sie können mit einem symmetrischen Werkzeug erzeugt werden
$\beta_{br} \neq \beta_{bl}$ und

$$\cos \beta_{br} \cdot r_{br} = \cos \beta_{bl} \cdot r_{bl}$$

Typ 4: Asymmetrisches Beveloids, d.h. sie können nur mit einem asymmetrischen Werkzeug erzeugt werden
$\beta_{br} \neq \beta_{bl}$ und

$$\cos \beta_{br} \cdot r_{br} \neq \cos \beta_{bl} \cdot r_{bl} \text{ und } \frac{\tan \beta_{br}}{r_{br}} \neq \frac{\tan \beta_{bl}}{r_{bl}}$$

Im Folgenden werden die folgenden Bezeichnungen für die Transformationen verwendet:

- $R_x(\phi)$: Rotation um den Winkel $\phi$ um die x-Achse. Analog für y und z
- $T_x(v)$: Translation um die Strecke $v$ in x-Richtung. Analog für y und z
- $H(A_1 \dots A_N)$: allgemeine Transformation beschreibbar durch eine homogene Matrix mit insgesamt $N$ Koordinaten $A_1$ bis $A_N$.

Der Begriff "Koordinaten" wird hier für generalisierte, nicht notwendigerweise unabhängige Koordinaten verwendet. Im einfachsten Fall entsprechen diese Koordinaten den Stellungen translatorischer oder rotatorischer Achsen und die Transformation ist durch eine kinematische Kette, zusammengesetzt aus Translationen und Rotationen, gegeben.

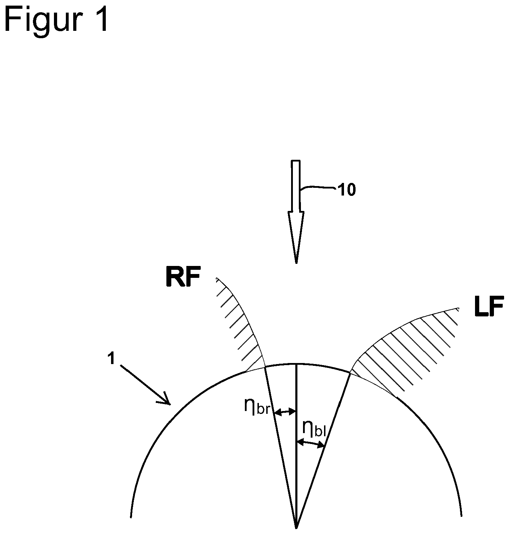

Die Rotationsachse einer Verzahnung fällt in ihrem Ruhesystem immer mit der z-Achse zusammen. Auf Grund der Asymmetrie der hier beschriebenen Verzahnungen, werden für linke und rechte Flanke LF, RF unterschiedliche verallgemeinerte Grundlückenhalbwinkel $\eta_{bl}$ und $\eta_{br}$ eingeführt (siehe Figur 1). Für eine gegebene Verzahnung 1 ist nur die Summe $\Sigma\eta_b := \eta_{bl} + \eta_{br}$ eindeutig. Die Orientierung einer Verzahnung, d.h. die Ausrichtung der Lücken bzw. Zähne ist durch die Differenz $\Delta\eta_b := \eta_{bl} - \eta_{br}$ eindeutig gegeben. Die Werte für $\eta_{bl}$ und $\eta_{br}$ hängen von der beliebig wählbaren Referenzrichtung 10 der Lücke ab. Bei symmetrischen Verzahnungen kann hier die Mitte gewählt und in diesem Fall gilt: $\eta_{bl} = \eta_{br}$. Für Beveloidverzahnungen beziehen sich $\Delta\eta_b$, $\Sigma\eta_b$, $\eta_{bl}$ und $\eta_{br}$ auf eine Referenz-Stirnschnittebene. Bei zylindrischen Verzahnungen sind diese Größen in allen Stirnschnittebenen hingegen gleich.

Die Zahndicke wird hier synonym für die Größen Kugelmaß, Zahnweite, $\Sigma\eta_b$ oder ein anderes Prüfmaß verwendet. Alle diese Größen lassen sich direkt ineinander umrechnen. In einem w-b-Diagramm werden Eigenschaften einer Flanke über den Wälzweg w und die z-Position b aufgetragen.

Um die relative Lage der beiden Zahnräder, d.h. des Werkzeuges und des Werkstückes zueinander zu bestimmen, werden die folgenden kinematischen Ketten definiert, die dem jeweiligen Evolventyp des Werkzeuges und des Werkstückes Rechnung tragen. Der Einfachheit halber wird im Folgenden nur noch von den Verzahnungen 1 und 2 gesprochen, wobei die Verzahnung 1 entweder das Werkstück oder das Werkzeug darstellt und die Verzahnung 2 das korrespondierende Gegenrad, d.h. das Werkzeug oder das Werkstück ist.

Kinematische Kette bei zwei zylindrischen Verzahnungen 1 und 2:

Die relative Lage der beiden Verzahnungen 1, 2 wird durch die folgende kinematische Kette $K_R$ beschrieben:

$$K_R := R_z(-\phi_1) \cdot T_z(-z_{V1}) \cdot T_y(d) \cdot R_y(\gamma) \cdot T_z(z_{V2}) \cdot R_z(\phi_2)$$

wobei $\phi_1$ den Drehwinkel des Zahnrades 1, $\phi_2$ den Drehwinkel des Zahnrades 2, $z_{V1}$ den Axialvorschub des Zahnrades 1, $z_{V2}$ den Axialvorschub des Zahnrades 2, $d$ den Achsabstand und $\gamma$ den Achskreuzwinkel darstellt.

Kinematische Kette bei einer konischen Verzahnung 1 und einer zylindrischen Verzahnung 2:

Die relative Lage der beiden Verzahnungen 1, 2 wird durch die folgende kinematische Kette $K_R$ beschrieben:

$$K_R := R_z(-\phi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_z(\phi_2)$$

wobei $\phi_1$ den Drehwinkel des Zahnrades 1, $\phi_2$ den Drehwinkel des Zahnrades 2, $z_{V1}$ den Vorschub des Zahnrades 1, $z_{V2}$ den Axialvorschub des Zahnrades 2, $d$ das Maß für den Achsabstand, $\gamma$ den Achskreuzwinkel, $\vartheta_1$ den Konuswinkel des Zahnrades 1 und $r_{w1}$ den Wälzkreisradius von Zahnrad 1 beschreibt.

Kinematische Kette bei zwei konischen Verzahnung 1 und 2:

Die relative Lage der beiden Verzahnungen 1, 2 wird durch die folgende kinematische Kette $K_R$ beschrieben:

$$K_R := R_z(-\phi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_x(-\vartheta_2)$$
$$\cdot T_y(-r_{w2}) \cdot R_z(\phi_2)$$

wobei $\phi_1$ den Drehwinkel des Zahnrades 1, $\phi_2$ den Drehwinkel des Zahnrades 2, $z_{V1}$ den Vorschub des Zahnrades 1, $z_{V2}$ den Vorschub des Zahnrades 2, $d$ das Maß für den Achsabstand, $\gamma$ den Achskreuzwinkel, $\vartheta_1$ den Konuswinkel des Zahnrades 1, $\vartheta_2$ den Konuswinkel des Zahnrades 2, $r_{w1}$ den Wälzkreisradius von Zahnrad 1 und $r_{w2}$ von Zahnrad 2 beschreibt.

Da sich der Achsabstand der beiden Drehachsen mit dem Vorschub ändert, wenn mindestens eine der beiden Verzahnungen konisch ist, wird in diesem Fall hier $d$ nur als Maß für den Achsabstand bezeichnet. Der tatsächliche Achsabstand für gegebene Vorschübe $z_{V1}$ und $z_{V2}$ lässt sich direkt aus den kinematischen Ketten berechnen. Im weiteren Verlauf wird jedoch auch dieses Maß für den Achsabstand als Achsabstand bezeichnet.

Die Vorschübe $z_{V1}$ und $z_{V2}$ verlaufen bei konischen Verzahnungen nicht in axialer Richtung, sondern gegenüber dieser Richtung um den jeweiligen Konuswinkel gekippt. Daher werden diese hier als Vorschub und nicht, wie bei zylindrischen Rädern, als Axialvorschub bezeichnet. Im weiteren Verlauf wird jedoch auch für zylindrische Räder der Begriff Vorschub verwendet.

Koordinatentransformation:

Diese kinematischen Ketten bilden alle sechs räumlichen Freiheitsgrade ab. Sie müssen nicht mit den physikalischen Achsen der Bearbeitungsmaschine, auf der das erfindungsgemäße Verfahren angewendet wird, übereinstimmen. Verfügt die Maschine über einen Bewegungsapparat, der Relativstellungen der beiden Räder 1, 2 gemäß einer Transformation
$H(A_1 ... A_n)$ *mit* $N \geq 1$
ermöglicht, so lassen sich aus den Koordinaten $A_1 ... A_N$ durch Gleichsetzen

$$K_R = H(A_1 ... A_N)$$

die Koordinaten $\phi_1$, $\phi_2$, $z_{V1}$, $z_{V2}$, $d$ und $\gamma$ bestimmen. An einigen Stellen in dieser Erfindung ist auch eine Umkehrung dieser Transformation nötig, d.h. es müssen aus den Werten $\phi_1$, $\phi_2$, $z_{V1}$, $z_{V2}$, $d$ und $\gamma$ die Koordinaten $A_1 ... A_N$ berechnet werden. Die in diesem Zusammenhang erwähnten Verfahren sind auf einer Maschine mit einem gegebenen Bewegungsapparat nur möglich, wenn für die für den speziellen Fall bestimmten Werte $\phi_1$, $\phi_2$, $z_{V1}$, $z_{V2}$, $d$ und $\gamma$ diese Rückrechnung möglich ist. Diese Rückrechnung muss nicht notwendigerweise zu einer eindeutigen Lösung für $A_1 ... A_N$ führen. Typische Bewegungsapparate, die die Rückrechnung für alle Werte $\phi_1$, $\phi_2$, $z_{V1}$, $z_{V2}$, $d$ und $\gamma$ ermöglichen sind beispielsweise durch folgende kinematischen Ketten beschrieben:

$$H_{Bsp1} = R_z(\phi_{B1}) \cdot T_z(-v_{V1}) \cdot R_x(90° - \phi_{A1}) \cdot T_z(-v_{Z1}) \cdot T_x(-v_{X1}) \cdot R_z(\phi_{C2})$$

$$H_{Bsp2} = R_z(\phi_{B1}) \cdot R_x(90° - \phi_{A1}) \cdot T_z(-v_{Y1}) \cdot T_z(-v_{Z1}) \cdot T_x(-v_{X1}) \cdot R_z(\phi_{C2})$$

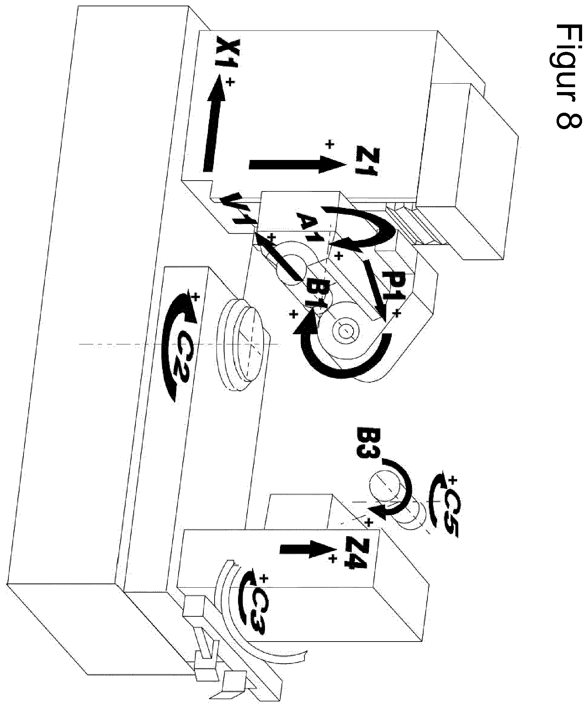

Figur 8 zeigt schematisch eine Verzahnmaschine mit einem durch $H_{Bsp1}$ beschriebenen Bewegungsapparat.

Für die Lagebestimmung der Evolventen werden nun die folgenden Zusammenhänge definiert: Betrachtet werden zylindrische Evolventenverzahnungen 1 und 2, die nicht notwendigerweise miteinander kämmen müssen. Zwei Verzahnungen kämmen dann und nur dann miteinander, wenn gilt:

$$m_{bF1} \cdot \cos \beta_{bF1} = m_{bF2} \cdot \cos \beta_{bF2}$$

Hierbei spielt es keine Rolle, ob die Verzahnungen konisch oder zylindrisch sind. Zur Lagebestimmung werden sowohl eine linke Flanke des Werkstücks und eine linke Flanke des Werkzeugs und anschließend eine rechte Flanke des Werkstücks und eine rechte Flanke des Werkzeugs in Kontakt gebracht. Dazu wird der Bewegungsapparat verfahren und der Kontakt mit einem der bekannten Verfahren detektiert. Eine Erkennung des Kontaktes kann beispielsweise anhand der Messung des Drehmomentes des jeweiligen Achsantriebes feststellt werden.

Bei beiden Kontakten wird je ein Satz an Koordinaten $A_{F1} ... A_{FN}$ aufgenommen und aus ihm je ein Satz Koordinaten $\phi_{F1}$, $\phi_{F2}$, $z_{VF1}$, $z_{VF2}$, $d_F$ und $\gamma_F$ gemäß der obigen Gleichungen errechnet.

Alternativ kann hier und im weiteren Verlauf die Reihenfolge der Messung umgekehrt werden, sodass zunächst die rechten und anschließend die linken Flanken in Kontakt gebracht werden.

Ein enormer Vorteil des erfindungsgemäßen Verfahrens besteht darin, dass es keine Rolle spielt, welche Achsen wie verfahren werden, um den Kontakt zu erzielen. Es können theoretisch alle Achsen gemeinsam genutzt werden oder nur eine Achse alleine. Beim bisherigen aus dem Stand der Technik bekannten Einmitten wurde bisher nur eine der Achsen $\phi_1$ oder $\phi_2$ oder $z_{V1}$ oder $z_{V2}$ verfahren. Entscheidend ist lediglich, dass sich die beiden Verzahnungen auf den Evolventenflächen berühren. Diese Flexibilität kann beispielsweise zum einen dann von Vorteil sein, wenn die physikalischen Achsen des Bewegungsapparates nicht der hier definierten kinematischen Kette entsprechen, und somit ein Verfahren einer der Koordinaten $\phi_1$ oder $\phi_2$ oder $z_{V1}$ oder $z_{V2}$ das Verfahren mehrerer physikalischer Achsen erfordert. Ein solches Verfahren mehrerer Achsen führt in der Regel zu einer größeren Ungenauigkeit und sollte, wenn möglich vermieden werden. Insbesondere dann, wenn mindestens eine der Verzahnungen konisch ist, ist der gerade beschriebene Fall der nicht übereinstimmenden kinematischen Ketten häufig gegeben. Ein weiterer Vorteil besteht darin, die Berührpunkte auf einer oder auf beiden Verzahnungen vorzugeben. Dies kann sowohl bei der Aufmaßanalyse und/oder Flanken- und Profilmessung genutzt werden, als auch zur Vermeidung von Berührungen der beiden Verzahnungen auf nicht-evolventischen Bereichen, zum Beispiel auf Kanten der Verzahnungen.

Wenn beide Verzahnungen miteinander kämmen, kann die Berührung stattfinden, während das Schraubwälzgetriebe wälzgekoppelt dreht und der Kontakt kann durch Aufbrechen der Kopplung mit einer beliebigen dazu geeigneten Achse erzielt werden.

Für den Fall, dass beide Verzahnungen nicht miteinander kämmen, ist ein wälzgekoppeltes Drehen des Getriebes nur um kleine Winkel möglich, da es sonst zu Kollisionen mit anderen Zähnen kommt. Die Berührung muss somit quasi im Stillstand stattfinden.

Die für die meisten hier aufgeführten Berechnungen wichtigste Relation ergibt sich aus der Berechnung der Bedingung, die erfüllt sein muss, wenn sich zwei linke, bzw. zwei rechte Flanken zweier Evolventenverzahnung in einem Schraubwälzgetriebe berühren. Die Flanken einer zylindrischen oder konischen Evolventenverzahnung können durch folgende Parametrisierung beschrieben werden:

$$E(w,b) = \begin{pmatrix} r_{bF} \cdot \sin\left(s_F \cdot \left(\frac{w}{r_{bF}} + \eta_{bF}\right) - \frac{b \cdot \tan(\beta_{bF})}{r_{bF}}\right) - s_F \cdot w \cdot \cos\left(s_F \cdot \left(\frac{w}{r_{bF}} + \eta_{bF}\right) - \frac{b \cdot \tan(\beta_{bF})}{r_{bF}}\right) \\ r_{bF} \cdot \cos\left(s_F \cdot \left(\frac{w}{r_{bF}} + \eta_{bF}\right) - \frac{b \cdot \tan(\beta_{bF})}{r_{bF}}\right) + s_F \cdot w \cdot \sin\left(s_F \cdot \left(\frac{w}{r_{bF}} + \eta_{bF}\right) - \frac{b \cdot \tan(\beta_{bF})}{r_{bF}}\right) \\ b \end{pmatrix}$$

[GL_Evo]

w parametrisiert hier den Zahn in Profilrichtung und b in Flankenlinienrichtung.

$s_F$ dient dazu, Gleichungen für linke und rechte Flanken in einer kompakten Form zu schreiben und ist definiert durch:

$$s_F := \begin{cases} +1, \text{ für linke Flanken} \\ -1, \text{für rechte Flanken} \end{cases}$$

Die hier gesuchte Relation erhält man, indem man die Berührung zweier linker bzw. zweier rechter Flanken in demselben Bezugssystem berechnet. Hierzu kann beispielsweise das Ruhesystem der Verzahnung 1 gewählt werden. Die Flanke der Verzahnung 1 ist in diesem Bezugssystem direkt durch die oben angegebene Parametrisierung gegeben. Um die Flanke der Verzahnung 2 in diesem Bezugssystem zu beschreiben, muss die oben angegebene Parametrisierung zunächst mit Hilfe der durch die zuvor definierte kinematische Kette $K_R$ gegebenen Transformation in dieses System transformiert werden.

Im Folgenden wird ein alternativer Berechnungsansatz aufgezeigt, mit dem sich die Berührungen berechnen lassen. Diese Berechnung der Berührung zwischen Werkstück und Werkzeug wird mit Hilfe zweier theoretischer Zahnstangen 60, 61 (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

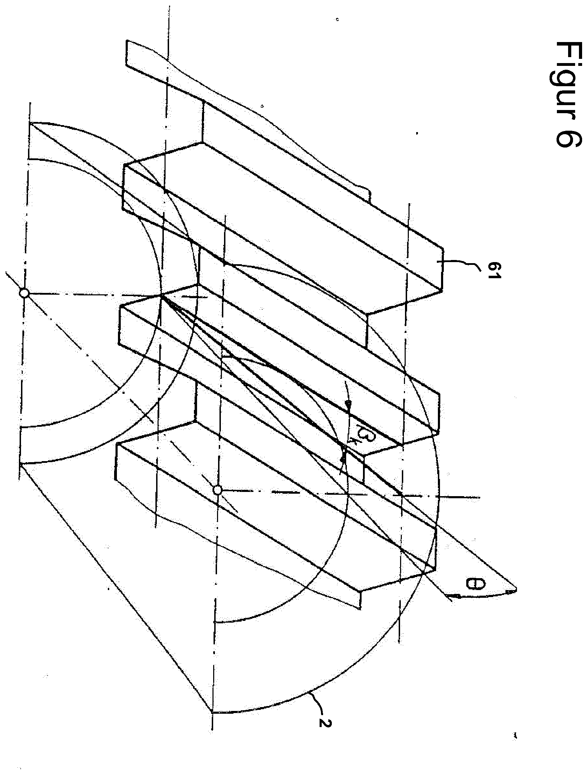

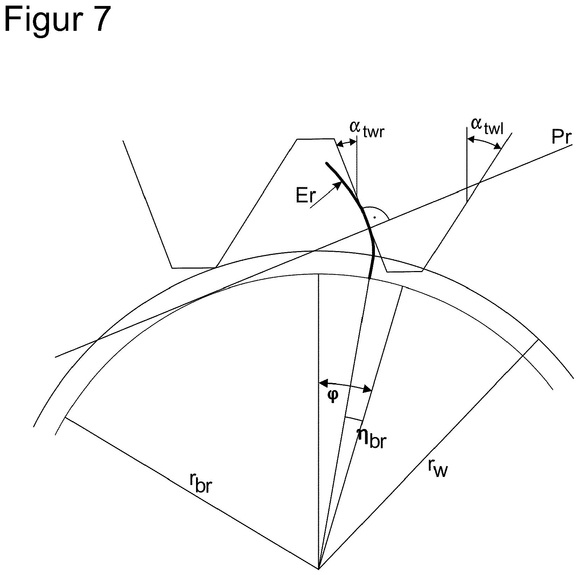

Figur 7 zeigt beispielhaft die Berührung einer rechten evolventischen Flanke $E_r$ mit einer generierenden Zahnstange mit Profilwinkel $\alpha_{twr}$ im Stirnschnitt. Die Verzahnung ist um den Drehwinkel $\varphi$ gedreht. Die Berührung zwischen Flanke und Zahnstange findet in der Eingriffsebene $P_r$ statt, welche um $\alpha_{twr}$ geneigt ist. Der Berührpunkt zwischen Flanke und Zahnstange ergibt sich für alle Drehwinkel $\varphi$ als Schnittpunkt zwischen Flanke und Eingriffsebene. Während die Verzahnung dreht, wird die Zahnstange waagerecht verschoben, so dass sie schlupffrei auf dem Wälzkreis mit Radius $r_w$ abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel $\beta_w$ geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel $\beta_w$ erfolgt ein Kippen um den Konuswinkel $\vartheta$ (siehe Figur 6). In beiden Fällen hat die Zahnstange im Normalschnitt die Profilwinkel $\alpha_{nwF}$. Welche Kombinationen von Winkeln $\alpha_{twF}$, $\alpha_{nwF}$ und $\beta_w$ sowie Normalmodul $m_n$ und Stirnmodul $m_t$ möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange 60, 61 zur Verzahnung 1, 2 bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel $\varphi$ eine Gerade (Berührgerade) B1, B2 in der Eingriffsebene P1, P2. Beschreibt man diese Berührpunkte über w und b aus der Parametrisierung in Gleichung [GL_Evo], so erhält man einen linearen Zusammenhang (R1) zwischen w, $b$ und $\varphi$. Wird die Zahnstange im Raum festgehalten, so ist es für zylindrische Verzahnungen möglich, diese in axialer Richtung zu verschieben. Dieser Axialvorschub $z_V$ wird typischerweise für das Werkstück eingestellt, um dieses über die ganze verzahnte Breite zu bearbeiten und für das Werkzeug eingestellt, um einzustellen, welcher Teil des Werkzeugs Kontakt mit dem Werkstück hat. Damit die Verzahnung weiterhin, inflankig oder zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub $z_V$ nicht in axialer Richtung, sondern gegenüber dieser um den Konuswinkel $\vartheta$ gekippt. sich nach derselben Formel wie für zylindrische Verzahnungen aus $\beta_w$ und $m_t$. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen w, $b$, $z_V$ und $\varphi$.

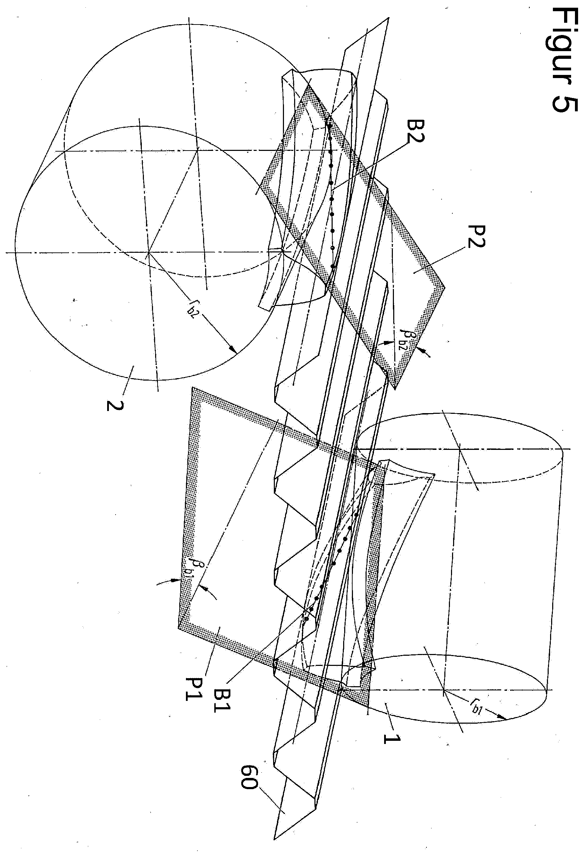

Werden zwei Verzahnungen in einem Schraubwälzgetriebe gepaart, so müssen deren beiden Zahnstangen 60, 61 zu jeder Zeit deckungsgleich sein, wie in Figur 5 gezeigt. Das impliziert, dass die Profilwinkel $\alpha_{nwF}$ für beide Verzahnungen gleich sein müssen. Des Weiteren ergibt sich daraus (R3): $\gamma + \beta_{w1} + \beta_{w2} = 0$. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Zur Verdeutlichung wird auf die beiden Figurendarstellungen der Figuren 5, 6 verwiesen.

Figur 5 zeigt hier eine Darstellung zweier Verzahnungen 1, 2 in einem Schraubwälzgetriebe inklusive der gemeinsamen Zahnstange 60 und den resultierenden Eingriffsebenen P1, P2 bzw. Berührlinien B1, B2 der Verzahnungen 1, 2 mit der Zahnstange 60. Zur besseren Darstellung entspricht die relative Lage der beiden Verzahnungen 1, 2 nicht der im Schraubwälzgetriebe. Die Figur 5 zeigt auch die relative Lage einer zylindrischen Verzahnung zur generierenden Zahnstange. Figur 6 stellt eine konische Verzahnung 1 mit einer sie generierenden Zahnstange 61 dar.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden B1, B2 bestimmen. Die Parameter $b_{F1}$ und $w_{F1}$ bzw. $b_{F2}$ und $w_{F2}$, welche den Berührpunkt auf Verzahnung 1 bzw. Verzahnung 2 beschreiben, hängen linear von $\varphi_1$, $\varphi_2$, $z_{V1}$ und $z_{V2}$ ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von $\varphi_1$ und $\varphi_2$ ein linearer Zusammenhang (R7) zwischen $w_{F1}$, $w_{F2}$, $z_{V1}$ und $z_{V2}$, welche, abhängig vom Vorschub beschreibt, welcher Wälzweg auf Verzahnung 1 welchen Wälzweg auf Verzahnung 2 berührt.

Zu beachten ist, dass sich bei einer Änderung des Achskreuzwinkels sowohl die Profilwinkel der Zahnstangen 60, 61 als auch die Schrägungswinkel zwischen den Drehachsen der Verzahnungen 1, 2 und den Zahnstangen 60, 61 ändern. Bei konischen Verzahnungen ändert sich zusätzlich noch der Konuswinkel, wodurch sich die durch die kinematische Kette definierte Transformation ändert. Wird ein spielfreies Getriebe zweier miteinander kämmender Verzahnungen betrachtet, haben beide Zahnstangen gleichen Modul und es liegen sowohl die linken als auch die rechten Flanken sich im gegenseitigen Eingriff befindlicher Zähne jeweils in identischen Ebenen. Dies ist beispielsweise bei einer zweiflankigen Bearbeitung der Fall. Bei der Lagebestimmung liegt im Allgemeinen kein spielfreies Getriebe vor, d.h., es liegen nur linke oder nur rechte Flanken sich im gegenseitigen Eingriff befindlicher Zähne in einer identischen Ebene. Wird die Lage nicht kämmender Räder bestimmt, haben die beiden Zahnstangen im Allgemeinen weder denselben Profilwinkel im Normalschnitt jeweils auf linker oder rechter Flanke noch denselben Modul. Gibt man einen Achskreuzwinkel $\gamma_F$ vor, der bei der Berührung zweier linker bzw. zweier rechter Flanken eingestellt sein soll, so ergibt die Berechnung der Berührung aus (R4), dass eine Berührung dann und nur dann stattfindet, wenn die folgende Relation erfüllt ist:

$$a_{F1} + b_{F1} \cdot z_{VF1} + c_{F1} \cdot \eta_{bF1} + d_{F1} \cdot \phi_{F1} + a_{F2} + b_{F2} \cdot z_{VF2} + c_{F2} \cdot \eta_{bF2} + d_{F2} \cdot \phi_{F2} +$$

$$e_F \cdot d_F = 0 \qquad\qquad\qquad \text{[GL\_Rel]}$$

Hierbei sind die Koeffizienten

$$a_{F1,}\, a_{F2}, e_F \qquad\qquad\qquad \text{[GL\_Koeff]}$$

sowohl von den Grundgrößen der Verzahnungen als auch von $\gamma_F$ und bei konischen Verzahnungen von den Konuswinkeln abhängig, während die Koeffizienten

$$c_{F1}, d_{F1}, c_{F2}, d_{F2} \qquad\qquad\qquad \text{[GL\_Konst]}$$

nur von den Grundgrößen der Verzahnungen abhängig sind.

Die Koeffizienten

$$b_{F1}, b_{F2} \qquad\qquad\qquad \text{[GL\_Konst2]}$$

sind bei zylindrischen Verzahnungen nur von den Grundgrößen abhängig, bei konischen Verzahnungen ist der entsprechende Koeffizient zusätzlich von $\gamma_F$ und dem entsprechenden Konuswinkel abhängig.

Mit den Grundgrößen sind hier die Grundkreisradien, die Grundschrägungswinkel und die Zähne-/ Gangzahlen ($z_1$ und $z_2$) gemeint.

Aus den beiden Gleichungen ([GL-Rel]) für die linke und rechte Flanke lassen sich mit den zwei aus den aufgenommen Koordinatensätzen berechneten Sätzen an Koordinaten die Grundlückenhalbwinkel $\eta_{bl1}$ und $\eta_{br1}$ bei gegebenen $\gamma_F$ und ggf. den Konuswinkeln direkt berechnen, womit die exakte Lage der Evolventen bestimmt wäre. Voraussetzung hierfür ist die Kenntnis von $\eta_{bl2}$ und $\eta_{br2}$, d.h. die Lagen der linken und rechten Evolventen von Verzahnung 2.

Bei symmetrischen zylindrischen und symmetrischen konischen Verzahnungen gelten folgende Symmetrien:

$$c_{l1} = -c_{r1},$$

$$d_{l1} = d_{r1}$$

$$c_{l2} = -c_{r2},$$

$$d_{l2} = d_{r2} \qquad \text{[GL\_Sym\_zyl\_kon]}$$

Bei symmetrischen zylindrischen Verzahnungen gelten zusätzlich folgende Symmetrien:

$$e_l = -e_r, \; wenn \; \gamma_l = \gamma_r$$

$$a_{l1} = -a_{r1}, \; wenn \; \gamma_l = \gamma_r$$

$$b_{l1} = b_{r1}$$

$$a_{l2} = -a_{r2}, \; wenn \; \gamma_l = \gamma_r$$

$$b_{l2} = b_{r2} \qquad \text{[GL\_Sym\_zyl]}$$

Wenn die beiden Räder miteinander kämmen, kann Gleichung ([GL_Rel]) mit anderen Koeffizienten geschrieben werden, hier mit Überstrich versehen, welche dieselben Abhängigkeiten von $\gamma_F$, den Grundgrößen und ggf. den Konuswinkeln aufweisen, wie vorstehend für die Größen ohne Überstrich ausgeführt wurde, jedoch - unabhängig vom Typ der Verzahnungen und ob diese symmetrisch sind - folgende Symmetrien aufweisen:

$$\frac{\bar{c}_{F1}}{\bar{c}_{F2}} = \frac{z_1}{z_2}$$

$$\frac{\bar{d}_{F1}}{\bar{d}_{F2}} = \frac{z_1}{z_2}$$

$$\bar{b}_{l1} = \bar{b}_{r1}$$

$$\bar{b}_{l2} = \bar{b}_{r2}$$

$$\bar{c}_{l1} = -\bar{c}_{r1}$$

$$\bar{c}_{l2} = -\bar{c}_{r2}$$

$$\bar{d}_{l1} = \bar{d}_{r1}$$

$$\bar{d}_{l2} = \bar{d}_{r2} \quad \text{[GL\_kaem]}$$

$$\bar{a}_{F1} + \bar{b}_{F1} \cdot z_{VF1} + \bar{c}_{F1} \cdot \eta_{bF1} + \bar{d}_{F1} \cdot \phi_{F1} + \bar{a}_{F2} + \bar{b}_{F2} \cdot z_{VF2} + \bar{c}_{F2} \cdot \eta_{bF2} + \bar{d}_{F2} \cdot \phi_{F2} +$$

$$\bar{e}_F \cdot d_F = 0 \qquad \text{[GL\_Rel2]}$$

Mit den Beziehungen aus Gleichung ([GL_kaem]) folgt aus Gleichung ([GL_Rel2]), dass $\Sigma\eta_{b1} := \eta_{bl1} + \eta_{br1}$ und somit die Zahndicke allein mit Kenntnis von $\Sigma\eta_{b2} := \eta_{bl2} + \eta_{br2}$ und zweier Koordinaten Sätze, je einem für linke und einem für rechte Flanke, bestimmt werden kann. Folglich müssen zur Zahndickenbestimmung bei kämmenden Verzahnungen die Lagen der linken und rechten Evolventen ($\eta_{bl2}, \eta_{br2}$) von Verzahnung 2 nicht bekannt sein. Es genügt nur die Zahndicke der Verzahnung 2 zu kennen. Analog lässt sich $\Delta\eta_{b1} := \eta_{bl1} - \eta_{br1}$ und somit die Lage der Zähne bzw. der Lücken allein mit der Kenntnis von $\Delta\eta_{b2} := \eta_{bl2} - \eta_{br2}$ und zweier Koordinatensätze bestimmen. Folglich muss zur Bestimmung der Lage der Zähne bzw. Lücken an der verzahnung 1 bei kämmenden Verzahnungen nur die Orientierung der Zähne bzw. Lücken der Verzahnung 2 bekannt sein.

Der oben gewählte Ansatz zur Berechnung einer Berührung zweier Evolventen kann auch genutzt werden, um die Punkte auf beiden Flanken auf beiden Verzahnungen zu berechnen, die sich bei einer gegebenen relativen Lage, definiert durch die Koordinaten $\gamma$, $d$, $z_{V1}$, $z_{V2}$, $\phi_1$ und $\phi_2$, berühren, sofern gerade eine Berührung stattfindet. Dabei wird ausgenutzt, dass die Berührung beider Verzahnungen mit ihrer Zahnstange jeweils entlang einer Geraden verläuft und diese Geraden in einer gemeinsamen Ebene verlaufen, woraus sich genau ein Schnittpunkt ergibt. Dieser Schnittpunkt, welcher auf beiden Zahnstangen liegt, entspricht gerade dem Berührpunkt der beiden Verzahnungen. Der Berührpunkt auf der Zahnstange kann dann Diese Umrechnung kann über die Erzeugung einer Evolventenverzahnung mit einem trapezförmigen Profil hergeleitet werden. Die genaue Lage der Geraden auf den Zahnstangen für einen gegebenen Drehwinkel ergibt sich aus der Tatsache, dass die Berührung der Zahnstange mit der Verzahnung in der Eingriffsebene liegen muss. Diese Ebene liegt tangential an den Grundkreis und steht senkrecht auf dem Profil der Zahnstange.

Man erhält so die folgenden Beziehungen:

$$b_{F1} = C_{b0F1} + C_{b\phi F1} \cdot \phi_{F1} + C_{bz_{V_1}F1} \cdot z_{VF1} + C_{bz_{V_2}F1} \cdot z_{VF2}$$

$$w_{F1} = C_{w0F1} + C_{w\phi F1} \cdot \phi_{F1} + C_{wz_{V_1}F1} \cdot z_{VF1} + C_{wz_{V_2}F1} \cdot z_{VF2}$$

$$b_{F2} = C_{b0F2} + C_{b\phi F2} \cdot \phi_{F2} + C_{bz_{V_1}F2} \cdot z_{VF1} + C_{bz_{V_2}F2} \cdot z_{VF2}$$

$$w_{F2} = C_{w0F2} + C_{w\phi F2} \cdot \phi_{F2} + C_{wz_{V_1}F2} \cdot z_{VF1} + C_{wz_{V_2}F2} \cdot z_{VF2} \qquad \text{[GL\_Ber]}$$

Die Koeffizienten $C_{bz_{V2}F1}$ und $C_{WZ_{V2}F1}$ bzw. $C_{bz_{V1}F2}$ und $C_{WZ_{V1}F2}$ sind nur dann von Null verschieden, wenn Verzahnung 1 bzw. Verzahnung 2 konisch ist. Ist dies der Fall, hängen sie ab von den Grundgrößen, dem entsprechenden Konuswinkel und $\gamma_F$. Die Koeffizienten $C_{b0F1}$, $C_{W0F1}$, $C_{b0F2}$ und $C_{W0F2}$ hängen zusätzlich von $d_F$ ab. Die Koeffizienten $C_{b\phi F1}$, $Cb_{\phi F1}$, $C_{b\phi F2}$ und $C_{W\phi F2}$ hängen nur von den Grundgrößen ab.

Die Beziehung aus Gleichung [GL_Ber] kann auch umgekehrt genutzt werden, um eine relative Lage der beiden Verzahnungen zueinander zu bestimmen, bei der auf einer oder auf beiden Verzahnungen die Berührung auf vorgegebenen Punkten stattfindet. Dazu werden $w_{F1}$ und/oder $b_{F1}$ und/oder $w_{F2}$ und/oder $b_{F2}$ vorgegeben und daraus Koordinaten $\gamma_F$, $d_F$, $z_{VF1}$, $z_{VF2}$, $\phi_{F1}$ und $\phi_{F2}$ berechnet, sodass die Gleichungen [GL_Ber] erfüllt sind.

Im Folgenden werden mögliche optionale Erweiterungen des erfindungsgemäßen Verfahrens bzw. mögliche Anwendungen des Verfahrens verdeutlicht.

Berücksichtigung von Modifikationen:

Das Bestimmen der Lage der Evolvente wird dann verfälscht, wenn eine oder beide der Verzahnungen 1, 2 modifiziert sind. Diese Modifikationen können beim Werkstück durch den Vorverzahnprozess bzw. durch Härteverzüge und/oder durch vorangegangene Bearbeitungschritte/-hübe mit modifizierten Werkzeugen und/oder modifizierter Bearbeitungskinematik kommen. Im ersten und letzten Fall sind diese in der Regel bekannt, im zweiten können sie evtl. aus Erfahrung oder Messungen gewonnen werden. Bei Werkzeugen sind diese auf Grund der Auslegung oder aus der Vermessung des Werkzeugs, wenn es sich bei den Modifikationen und ungewollte Abweichungen durch Verschleiß oder Fertigungsfehler handelt, bekannt. Diese Modifikationen verfälschen in gewissem Maße die Bestimmung der Lage der Evolventen. Sind die Modifikationen jedoch bekannt, können diese bei der Lagebestimmung berücksichtig werden.

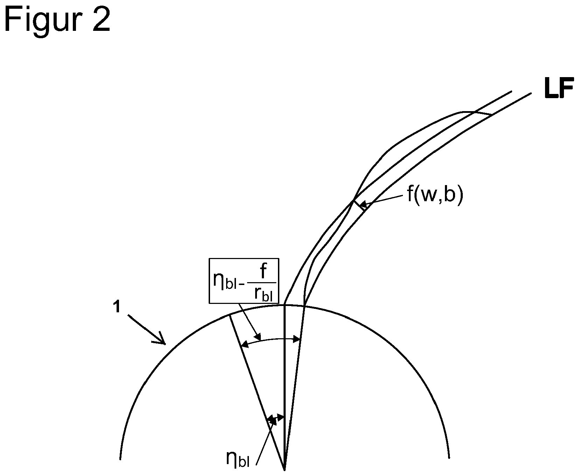

Modifikationen werden gewöhnlich in Stirnschnitten beschrieben und in diesem senkrecht zur Evolvente definiert. Sie werden hier mit $f_F(w,b)$ bezeichnet, wobei $w$ der Wälzweg ist und $b$ die z-Position der Stirnschnittebene definiert. Eine hinreichend gute Näherung des gemessenen und mit $f_F$ korrigierten $\eta_{bF}$ erhält man, wenn in Gleichung [GL_Rel] die $\eta_{bF}$ um den Summanden $-f_F(w,b)/r_{bF}$ korrigiert werden (siehe Figur 2).

Diese Korrektur kann sowohl auf beide Verzahnungen 1, 2 als auch nur auf eine angewandt werden. $w$ und $b$ sind hierbei der Wälzwinkel und der Stirnschnitt (definiert durch die z-Position), an dem sich die beiden Verzahnungen berühren. Bei großen Modifikationen kann das Ergebnis, insbesondere die Lage der gemessenen Modifikation, verfeinert werden, in dem $w$ um den Summanden $f_F(w,b)$ korrigiert wird. Wurde eine Verzahnung mit den gleichen Profilmodifikationen vorverzahnt, mit denen sie weiter verzahnt wird, so wäre eine Berücksichtigung der Korrekturen nicht nötig, wenn das Werkzeug auf voller Tauchtiefe ist, da in diesem Fall die Profilmodifikationen genau ineinander greifen und sich somit wieder kompensieren. Um möglichst tief kollisionsfrei eintauchen zu können, kann, je nach Auslegung des Werkzeugs, $\gamma$ variiert werden.

Motivation Lagebestimmung/Einmitten nicht kämmender Räder:

Bei Kleinserien ist es möglich, dass zum Vorverzahnen keine passenden Werkzeuge vorhanden sind und somit die Räder mit falschen Werkzeugen vorverzahnt werden müssen. Diese Problematik verstärkt sich bei asymmetrischen Verzahnungen, da auf Grund der unterschiedlichen Profilwinkel auf linker und rechter Flanke, die Wahrscheinlichkeit ein passendes Werkzeug zu haben, evtl. noch geringer ist, da beide Profilwinkel passen müssen. Mit einem falschen Werkzeug verzahnte Räder weisen in der Regel falsche Grundkreisradien und falsche Grundschrägungswinkel auf. Die Steigungshöhe, welche rein durch die Herstellkinematik bestimmt wird, lässt sich hingegen auch mit falschem Werkzeug richtig erzeugen.

In der Regel ist aber trotz des falschen, aber bekannten Werkzeugs mit bekannter Herstellkinematik die exakte Geometrie, insbesondere die Grundkreisradien und Grundschrägungswinkel des vorverzahnten Rades bestimmbar. Diese Kenntnis kann genutzt werden, um beim Weiterverzahnen die Lagen der vorverzahnten Evolventen mit dem hier beschriebenen Verfahren richtig zu bestimmen und richtig einzumitten. Für die Berechnung der richtigen Einmittposition ist in diesem Fall jedoch zu berücksichtigen, dass sich die Soll- und Ist-Flanken nicht nur in ihrer Lage unterscheiden, wie dies bei richtig vorverzahnten Werkstücken der Fall ist, sondern sich auf Grund der unterschiedlichen Grundkreisradien und/oder Grundschrägungswinkeln auch in ihrer Form unterscheiden. Die Soll-Lage ist vorzugsweise so zu bestimmen, dass entlang beider Flanken ein Mindestaufmaß nicht unterschritten und/oder ein Maximalaufmaß nicht überschritten wird.

Ist das Rad falsch vorverzahnt und die Geometrie ist nicht bekannt, kann zunächst durch eine Profil- und/oder Flankenmessung die Makrogeometrie, insbesondere die Grundkreisradien und Grundschrägungswinkel näherungsweise bestimmt werden. Eine weitere Anwendung wäre das lageorientierte Fertigen, wobei die zu bearbeitende Verzahnung an einer anderen Verzahnung, welche nicht mit dem Werkzeug kämmen muss, ausgerichtet werden soll.

Mehrfachmessung / Aufmaßanalyse / Profil-Flankenmessung:

Bei dem hier beschriebenen Verfahren genügt es in der Theorie genau eine linke und eine rechte Flanke zu berühren. Daraus lässt sich direkt die Lage der Evolventen berechnen. Um Einflüsse durch Messungenauigkeiten oder Profilabweichungen zu reduzieren, kann es sinnvoll sein, die Messungen an gleicher Stelle oder an anderen Stellen, das heißt mit anderen Berührpunkten und somit anderen Achsstellungen und/oder an anderen Lücken/Zähnen/Gängen der Werkzeugs und/oder des Werkstücks zu wiederholen und die Messwerte statistisch auszuwerten.

Mehrfachmessungen $i = 1 \ldots N$ mit verschiedenen Berührpunkten können aber auch dafür genutzt werden, um die Modifikationen bzw. das Aufmaß zu bestimmen. Die Modifikation bzw. das Aufmaß an einem durch $w[i]$ und $b[i]$ gegebenen Berührpunkt ist in hinreichender Näherung

$$f_F(w[i], b[i]) = (\eta_{b0F1} - \eta_{bF1[i]}) \cdot r_{bF},$$

wobei $\eta_{b0F1}$ die Lage der Referenzevolvente beschreibt. Diese kann wie bei herkömmlicher Verzahnungsmessung bestimmt werden, beispielsweise so, dass alle Modifikationen positiv sind. Um die Modifikation an einem durch $w$ und $b$ gegeben Punkt auf dem Werkstück (hier mit Index 1 bezeichnet) zu messen, müssen $\phi_1$, $z_{V1}$, $d$ und $\gamma$ so eingestellt werden, dass die Berührungen auf dem Werkstück an eben dem gewünschten Punkten stattfindet. Ein weiterer Punkt, der hier zu beachten ist, ist die Überdeckung des Schraubwälzgetriebes. Diese ist in der Regel größer als 1, was dazu führt, dass im Allgemeinen zu jeder Zeit mehrere linke bzw. mehrere rechte Flanken gleichzeitig Kontakt haben. Dies hat zur Folge, dass nicht mehr unterschieden werden kann, an welchem dieser Punkte der Kontakt stattfand und welcher Punkt somit gemessen wurde. Die Berührungen, welche auf unterschiedlichen Zähnen stattfinden, finden außerdem auch an unterschiedlichen z-Positionen, sowohl auf Werkzeug (hier mit Index 2 bezeichnet) als auch auf Werkstück statt. Dieser Umstand kann genutzt werden, um das gerade beschriebene Problem zu umgehen. Dazu wird $z_{V2}$ so eingestellt und damit das Werkzeug so verfahren, dass die z-Position, auf der der Punkt auf dem Werkzeug liegt, welcher den gewünschten Punkt auf dem Werkstück berührt, noch auf dem Werkzeug liegt, die z-Positionen der Punkte auf dem Werkzeug, welche theoretisch auch gleichzeitig im Eingriff wären, aber nicht mehr auf dem Werkzeug liegen. Somit ist sichergestellt, dass es Kontakt nur an einem Punkt gibt und die Messung eindeutig einem Punkt auf dem Werkstück zugeordnet werden kann. Dies führt letztlich dazu, dass der Kontakt in der Nähe der Enden des Werkzeugs in axialer Richtung stattfindet.

Lageorientiertes Fertigen:

Sollen die Evolventen einer Verzahnung bei der Fertigung an einer Referenzrichtung 10 (Figur 1) ausgerichtet werden, so ist dies gleichbedeutend mit der separaten Vorgabe von $\eta_{bl1}$ und $\eta_{br1}$ der gefertigten Verzahnung. Anhand der Zahndicke des Werkzeugs und der Sollzahndicke des Werkstücks werden für den Fertigungsprozess zunächst $\gamma$ und $d$ berechnet. Daraus lassen sich die Koeffizienten wie in Gleichung [GL_Koeff] berechnen.

Aus Gleichung [GL_Rel] für eine der beiden Flanken lässt sich zu gegebenem Drehwinkel einer Verzahnung

und Vorschüben ($z_{V1}$ und $z_{V2}$) beider Verzahnungen der Drehwinkel der anderen Verzahnung bestimmen, so dass $\eta_{b1}$ auf dieser Flanke erreicht wird. Bei Einflanken-Bearbeitung ist die Berechnung für die andere Flanke analog durchzuführen. Bei Zweiflanken-Bearbeitung ergibt sich der andere $\eta_{b1}$ automatisch richtig, wenn die Zahndicke des Werkzeugs, $d$ und $\gamma$ zuvor richtig aufeinander abgestimmt wurden. Alternativ kann auf gleiche Weise einer der Vorschübe berechnet werden, oder es können bis zu vier der Größen $\phi_1$, $\phi_2$, $z_{V1}$, $z_{V2}$ bestimmt werden, sodass [GL_Rel] erfüllt ist. Da beim Fertigen Werkzeug und Werkstück miteinander kämmen, kann für die Berechnung alternativ auch Gleichung ([GL_Rel2]) verwendet werden.

Eine gebräuchliche Variante die Lage der Evolventen zu definieren ist die Vorgabe der Lage der Mitte eines Zahns bzw. einer Lücke in einer definierten Stirnschnittebenen auf einem definierten Radius. Eine solche Lage ist unabhängig von der Zahndicke rein durch $\Delta\eta_b$ definiert. Eine Kenntnis von $\eta_{bl}$ und $\eta_{br}$ ist somit nicht von Nöten. Es genügt somit auch vom Werkzeug nur die Orientierung der Zähne zu kennen, welche ebenfalls beispielsweise über die Lage der Mitte eines Zahns bzw. einer Lücke beschrieben werden kann. Die Angabe eines Radius zur Definiton der Lage der Mitte ist nötig, wenn die Verzahnung einen asymmetrischen Stirnschnitt ($r_{bl} \neq r_{br}$) aufweist, da in diesem Fall die Mitte nicht auf allen Radien auf der selben Winkelposition liegt.

Anwendung auf Werkzeuge mit definierter Schneide:

Bei Werkzeugen mit nicht definierter Schneide (z.B. Schnecke) kann das Verfahren angewendet werden, wenn die beiden Räder in einem Getriebe drehen. In diesem Fall haben beide Räder permanent Kontakt, aber auch, wenn das Getriebe nicht dreht und die beiden Räder sich quasi im Stillstand berühren. Bei Werkzeugen mit definierter Schneide (z.B. Wälzfräser oder Schälrad) entspricht die Geometrie des Werkzeugs nicht der Hüllverzahnung, welche theoretisch das Werkstück fertigt (Bedingt durch Spannuten und den Hinterschliff der Schneiden oder aufgesetzte Schneidplatten).

Die Hüllverzahnung kann sowohl zylindrisch als auch konisch sein. Beispielsweise ist beim Wälzschälen mit zylindrischen Werkzeugen die Hüllverzahnung ein Beveloidrad, d.h. die Herstellkinematik entspricht einem Schraubwälzgetriebe mit konischem Werkzeug und einem zylindrischen oder konischen Werkstück. Bei konischen Werkzeugen ist die Hüllverzahnung in der Regel zylindrisch, kann jedoch auch konisch sein, abhängig von der Herstellkinematik. Die gemeinsamen Punkte von Werkzeug und seiner Hüllverzahnung sind die Punkte auf den Schneidkannten. Alle anderen Punkte auf dem Werkzeug liegen innerhalb (und nicht auf) der Hüllverzahnung.

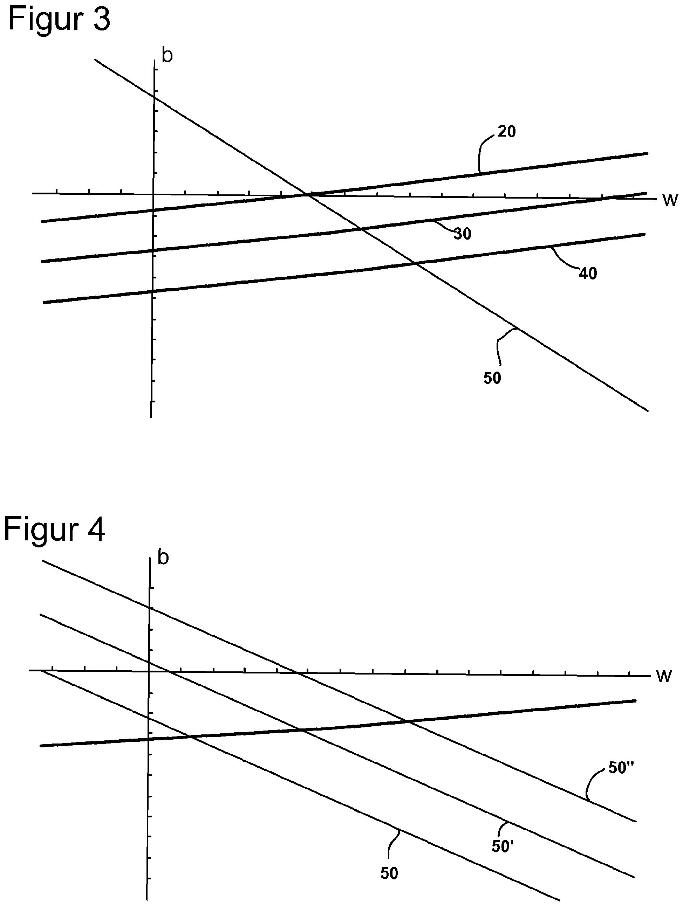

Figur 3 zeigt ein w-b-Diagramm, in dem die Eigenschaften einer Flanke über den Wälzweg $w$ und die z-Position $b$ aufgetragen werden. Insbesondere zeigt Figur 3 die Schneidkannten dreier Stollen 20, 30, 40 in einem w-b-Diagramm der Hüllverzahnung. Zusätzlich ist der Verlauf des Kontaktpunkts 50 auf der Hüllverzahnung mit dem Werkstück eingezeichnet. Nur wenn das Werkzeug das Werkstück an einem der Schnittpunkte dieser Linien berührt, kann das hier beschriebene Verfahren auf Werkzeuge mit definierter Schneide im quasi Stillstand zuverlässig und unverändert angewandt werden. Findet der Kontakt an anderer Stelle statt, wird das Ergebnis verfälscht, da der Kontakt nicht mehr auf, sondern innerhalb der Hüllverzahnung stattfindet. Um dieses Problem zu beheben gibt es zwei Lösungsmöglichkeiten.

Bei Kenntnis der genauen Lage der Stollen 20, 30, 40 auf dem Werkzeug kann die relative Lage mit Hilfe der Gleichungen [GL_Ber] vor dem Kontakt so gewählt werden, dass der Kontakt mit dem Gegenrad genau auf einem der Schnittpunkte und somit auf der Hüllverzahnung stattfindet. Das Verfahren kann dann unmodifiziert angewandt werden.

Ist es nicht möglich oder nicht gewollt das Werkzeug entsprechend zu drehen, kann bei Kenntnis der Lage der Stollen 20, 30, 40 auf dem Werkzeug berechnet werden, wie weit der Kontaktpunkt von einem Schnittpunkt abweicht und somit berechnet werden, wo er innerhalb der Hüllverzahnung liegt und daraus ein Korrekturwert berechnet werden, der die Abweichung im Vergleich zu einer Berührung auf der Hüllverzahnung korrigiert. Somit kann das Verfahren für nicht kämmende Räder für Werkzeuge mit definierter Schneide angewandt werden.

Bei Werkzeugen, deren Geometrie nur auf Teilflächen mit der Hüllverzahnung übereinstimmt, wie beispielsweise bei Schabrädern, kann analog wie bei Werkzeugen mit definierter Schneide vorgegangen werden. Der Berührpunkt muss in diesem Fall auf dem Teil des Werkzeugs liegen, der mit der Hüllverzahnung übereinstimmt.

Vorteil nicht drehender Getriebe:

Neben dem Vorteil, dass die Räder nicht mit einander kämmen müssen, kann es ein Vorteil sein, dass der Kontakt sehr "sanft" sein kann und somit keines der beiden Räder beschädigt wird. Wird der Kontakt bei einem sich drehenden Getriebe hergestellt, kommt es immer zu Reibung, Abrieb, Verschleiß.

Vermessen eines Werkzeugs:

Das Verfahren kann auch umgekehrt angewendet werden und es kann mit einem vermessenen Zahnrad ein Werkzeug vermessen werden. Es können alle typischen Werte einer Verzahnungsmessung bestimmt werden, wie Profil, Flanke, Teilung, Zahndicke. Bei Werkzeugen mit definierter Schneide sind die oben erwähnten Punkte zu beachten.

Durch Verändern des Vorschubs des zu vermessenden Werkzeugs kann die Kontaktlinie 50, 50', 50" in b-Richtung verschoben werden, wodurch der Schnittpunkt dieser mit der Schneidkante in Profilrichtung verschoben werden kann. Dadurch wird eine Messung der Schneidkante über das ganze Profil möglich (siehe Figur 4). Ebenso wie bei der oben beschriebenen Messung eines Werkstücks, ergibt sich hier das Problem der mehrfachen Berührung auf Grund der Überdeckung. Die Lösung erfolgt hier analog durch geeignetes Verfahren des Zahnrads.

Abtragsoptimiertes Einmitten:

Ist eine Aufmaßanalyse des zu bearbeitenden Werkstücks vorgenommen worden, kann anhand dieser eine unter technologischen Gesichtspunkten optimale Lage der Evolventen des fertigverzahnten Rades bestimmt werden. Ist diese Lage bestimmt, kann bezüglich dieser lageorientiert gefertigt werden.

Wird das Aufmaß als konstant auf der ganzen Flanke angenommen, so kann die Lage der Evolventen so bestimmt werden, dass der Abtrag $f_{nF}$ in Normalenrichtung auf linken und rechten Flanken gleich ist. Unter Umständen kann es ausreichend sein, dass der Abtrag links und rechts nicht exakt gleich, sondern im Bereich 40% zu 60% liegt, wobei sich die Bereiche natürlich beliebig annähern können. In bestimmten Fällen kann es auch wünschenswert sein, den Abtrag gezielt unterschiedlich auf die beiden Flanken zu verteilen. Dies kann zum Beispiel dann sinnvoll sein, wenn sich am Werkzeug unterschiedlicher Verschleiß auf linker und rechter Flanke zeigt. Mit einer solchen asymmetrischen Abtragsverteilung kann dann eine Flanke entlastet, die andere entsprechend stärker belastet werden. Im Folgenden sei der Abtrag auf beiden Flanken gegeben durch $f_{nF} = 2q_F f_n$, mit $q_l + q_r = 1$ und $f_n = 0.5 \cdot (f_{nl} + f_{nr})$. $q_F$ beschreibt hierbei die Abtragsverteilung auf linke und rechte Flanke. Der gemittelte Abtrag $f_n$ ist gegeben durch:

$$f_n = \left( \sum \eta_{b,Fertigung} - \sum \eta_{b,Messung} \right) / \left( \frac{2q_l}{r_{br} \cdot \cos \beta_{br}} + \frac{2q_r}{r_{bl} \cdot \cos \beta_{bl}} \right)$$

mit

- $\sum \eta_{b,Fertigung}$: $\sum \eta_b$ entsprechend der Sollzahndicke
- $\sum \eta_{b,Messung}$: $\sum \eta_b$ entsprechend der gemessenen Zahndicke $\eta_{bF,Fertigung}$ lässt sich dann berechnen durch:

$$\eta_{bF,Fertigung} = \frac{f_n}{(r_{bF} \cdot \cos \beta_{bF})} + \eta_{bF,Messung}$$

Hierbei beschreibt $\eta_{bF,Messung}$ die zuvor gemessene Lage der Evolvente und $\eta_{bF,Fertigung}$ die beim Fertigen einzustellende Lage. Diese Beziehungen gelten für zylindrische und für konische Verzahnungen. Diese Lagen der Evolventen beim Fertigen können genutzt werden, um wie oben für das lageorientierte Fertigen beschrieben, die Größen $\phi_1$, $\phi_2$, $z_{V1}$, $z_{V2}$ für den Fertigungsprozess zu bestimmen.

Wendet man diese Berechnung auf eine symmetrische zylindrische Verzahnung bei Zweiflankenfertigung an, führt dies zu dem Ergebnis, das dem Stand der Technik entspricht. Dazu führt man die Lagebestimmung aus, in dem man nur $\phi_1$ oder nur $\varPhi_2$ oder nur $z_{V1}$ oder nur $z_{V2}$ verändert, um die linke und rechte Flanke zu berühren. Nutzt man dann die Symmetrien aus [GL_Sym_zyl] und [GL_Sym_zyl_kon] aus, um die Koordinaten für die Fertigung zu berechnen, so folgt:

$$z_{V1,Fertigung} = (z_{Vl1,Messung} + z_{Vr1,Messung})/2$$

bzw.

$$z_{V2,Fertigung} = (z_{Vl2,Messung} + z_{Vr2,Messung})/2$$

bzw.

$$\phi_{1,Fertigung} = (\phi_{l1,Messung} + \phi_{r1,Messung})/2$$

bzw.

$$\phi_{2,Fertigung} = (\phi_{l2,Messung} + \phi_{r2,Messung})/2$$

abhängig davon, welche Koordinate verändert wurde. Die zur Lagebestimmung nicht veränderten Koordinaten bleiben unverändert. Dies zeigt auf, wie trivial der Stand der Technik ist und wie komplex im Vergleich dazu, das hier vorgestellte Verfahren ist. Insbesondere ist keine Kenntnis über Koeffizienten aus [GL_Koeff] und [GL_Konst2] und die Konstanten aus [GL_Konst] von Nöten.

Lagebestimmung/Einmitten bei schmalen Verzahnungen und ungünstigen Kontaktbedingungen:

Berühren sich die linken und rechten Flanken bei der Bestimmung der Lage, so geschieht dies im Allgemeinen auf unterschiedlichen Verzahnungsbreiten, also an unterschiedlichen z-Positionen. Wie weit diese auseinanderliegen, hängt sowohl von den Geometrien der beiden Räder 1, 2 ab, als auch von der relativen Lage der beiden Räder zueinander ab. Ist eine der Verzahnungen 1, 2 so schmal, dass bei einer Lagebestimmung nur durch Verschieben ($z_{V1}$ bzw. $z_{V2}$) oder nur durch Drehen ($\phi_1$ bzw. $\phi_2$) einer der beiden Verzahnungen, der theoretische Abstand der Berührpunkte in z-Richtung auf linker und rechter Flanke größer ist als die Breite, so können die Berührung auf linker und rechter Flanke auf der schmalen Verzahnung nicht beide auf der Evolvente stattfinden. Mindestens einer der Kontakte findet auf der Kante statt, womit ein präzises Einmitten nicht mehr möglich ist. In diesem Fall ist auch ein Einmitten nach dem Stand der Technik für zylindrische symmetrische Räder nicht mehr möglich.

Dieses Problem lässt sich lösen, indem zwischen den Berührungen auf linker und rechter Flanke nicht nur eine der oben erwähnten Achsen verfahren wird, sondern entweder $\gamma$ geschwenkt wird oder mindestens zwei Achsen verfahren werden. Der erste Fall ist nur in bestimmten Fällen möglich, da der Einfluss von $\gamma$ auf den Abstand der Berührpunkte auf linker und rechter Flanke begrenzt ist. Ob diese Variante möglich ist, kann beispielsweise mit Gleichungen [GL_Ber] berechnet werden. Im zweiten Fall werden mindestens zwei der Achsen $\gamma$, $d$, $z_{V1}$, $z_{V2}$, $\phi_1$ und $\phi_2$ zum Erreichen der Berührung auf linker bzw. rechter Flanke so verfahren, dass der Kontaktpunkt jeweils noch auf dem evolventischen Bereich der beiden Verzahnungen, insbesondere der schmalen Verzahnung liegt. Die hierfür notwendige Berechnung kann beispielsweise mit Gleichungen [GL_Ber] durchgeführt werden..
In beiden Fällen kann mit [GL_Rel] wie bisher die Lage der Evolventen bestimmt werden.

Lageorientiertes Fertigen nach Abrichten eines abrichtbaren Werkzeugs bzw. bearbeiten mit anderem Werkzeug:

Ein sehr häufiger Spezialfall des lageorientierten Fertigens ist der Fall, bei dem mit einem Werkzeug mit einer, gegenüber der ursprünglichen Lagebestimmung veränderten Geometrie bearbeitet wird. Dies tritt z.B. dann auf, wenn mit abrichtbaren Werkzeugen bearbeitet wird, welche von Abrichtprozess zu Abrichtprozess immer kleiner werden und so ihre Geometrie ändern. Findet der Abrichtprozess in der Maschine statt, ist auf Grund dieses Prozesses die genaue Geometrie und auch Lage des Werkzeugs in der Regel bekannt. Alternativ kann die Lage des Werkzeugs jedoch auch messtechnisch bestimmt werden oder durch die Aufnahme auf der Spindel, beispielsweise anhand einer Nut, bestimmt sein. Diese zweite Variante kann beispielsweise dann angewendet werden, wenn das Werkzeug extern abgerichtet wird oder wenn es sich beispielsweise um ein extern nachgeschliffenes oder nachgeschärftes Werkzeug handelt, z.B. einen Wälzfräser oder ein Schälrad.

Das in dieser Erfindung beschriebene Verfahren zur Bestimmung der Lage der Evolventen eines Werkstückes wird nicht immer für jedes Werkstück eines Typs vor der Bearbeitung durchgeführt. Insbesondere in Serienproduktionen wird es üblicherweise für ein Werkstück eines Typs einmal oder wenige Male durchgeführt. Mit dem Ergebnis dieser Lagebestimmung wird dann ein Einfädelsensor angelernt. Solche Einfädelsensoren können im Allgemeinen nicht die absolute Lage des Werkstücks bestimmen, sondern nur die Lage relativ zu einer Referenzlage bestimmen, was ein solches Anlernen nötig macht. Dazu wird ein Werkstück, dessen Lage exakt bestimmt wurde, mit einem Einfädelsensor vermessen und die aktuelle Lage als Referenzlage abgespeichert. Mit Hilfe eines so angelernten Einfädelsensors ist es dann möglich, alle weiteren Werkstücke in dieselbe Lage zu bringen, bzw. ihre Lage relativ zur Referenzlage und damit auch absolut zu bestimmen. Ist auf diese Weise die Lage des Werkstücks sowie die Lage des Werkzeugs bekannt, kann, wie oben beschrieben, abtragsoptimiert oder nach einem anderen Verfahren optimiert bzw. lageorientiert mit dem aktuellen Werkzeug bearbeitet werden. Dabei kann das aktuelle Werkzeug jede Geometrie haben, die zur Fertigung des Werkstücks geeignet ist. Insbesondere kann das Werkzeug auch in den Eingriffswinkeln und/oder dem Schrägungswinkel und/oder der Gang-/Zähnezahl und/oder der Zahndicke und/oder ggf. dem Konuswinkel, gegenüber dem Werkzeug, dass verwendet wurde um den Einfädelsensor anzulernen, verändert sein. Des Weiteren können alle Achskreuzwinkel und alle Achsabstände eingestellt sein, die zur Fertigung des Werkstücks geeignet sind. Dieses Verfahren ist nötig, um über die ganze Lebensdauer des Werkzeugs präzise einmitten zu können. Selbst bei Werkzeugen, die nur im Durchmesser, nicht jedoch in den Eingriffswinkeln und/oder dem Schrägungswinkel und/oder ggf. dem Konuswinkel verändert werden, führt dieses Verfahren zu einem präziseren Einmitten im Vergleich zum Stand der Technik, bei dem nicht auf diese exakte Rechnung zurück gegriffen wird, sondern lediglich versucht wird, beim Abrichten die Schneckengänge an der selben Position auf der Schnecke zu halten.

Die Bestimmung der Lage des Werkstücks beim Anlernen des Einfädelsensors muss nicht notwendigerweise mit dem Werkzeug erfolgen. Hier kann alternativ beispielsweise ein Messtaster oder eine andere Messeinrichtung eingesetzt werden. Das Einfädeln mit einem Einfädelsensor ist auch nur eine Möglichkeit, die Lage des Werkstücks vor der Bearbeitung zu bestimmen. Alternativ ist beispielsweise auch eine Lagebestimmung mit einem Messtaster oder einer andere Messeinrichtung möglich.

Lageorientiertes Fertigen von mehr als einer Verzahnung in einer Aufspannung

In bestimmten Fällen ist es sinnvoll, mehr als eine Verzahnung eines Werkstücks in einer Aufspannung zu fertigen. Dies kann mit unterschiedlichen Werkzeugen für jede Verzahnung geschehen, welche auf derselben oder auch auf unterschiedlichen Spindeln montiert sein können. In bestimmten Fällen ist es jedoch auch möglich, mehr als eine Verzahnung mit einem Werkzeug zu fertigen. Sollen die Verzahnungen lageorientiert gefertigt werden, das heißt, eine Verzahnung an einer der anderen ausgerichtet werden, wie dies beispielsweise bei echten und unechten Pfeilverzahnungen der Fall ist, so kann ebenfalls der hier beschriebene Formalismus genutzt werden, unabhängig davon, ob mit dem selben oder mit unterschiedlichen Werkzeugen gefertigt wird. Dazu wird beispielsweise wie folgt vorgegangen:

- Die erste Verzahnung wird mit dem hier beschriebenen Verfahren mit einer definierten Lage zu einer Referenzrichtung gefertigt. Ist eine solche Referenzrichtung nicht gegeben, wird bezüglich einer beliebigen Richtung gefertigt und aus der Lage des Werkzeugs während der Fertigung die Lage der Verzahnung nach dem hier beschriebenen Formalismus bestimmt. Wird einflankig bearbeitet, können die Koordinaten $\gamma$, $d$, $z_{V1}$, $z_{V2}$, $\phi_1$ und $\phi_2$ für einen belie-bigen Zeitpunkt während der Bearbeitung einer Flanke aufgenommen werden und daraus ihre Lage bestimmt werden. Für die andere Flanke wird, wenn benötigt, entweder analog verfahren oder ihre Lage wird aus der Zahndicke, auf die gefertigt wird, berechnet werden. Wird zweiflankig bearbeitet können die Koordinaten $\gamma$, $d$, $z_{V1}$, $z_{V2}$, $\phi_1$ und $\phi_2$ für den gleichen oder für unterschiedliche Zeitpunkte der Bearbeitung für beide oder nur für eine Flanke aufgenommen werden und damit die Lagen bzw. Lage der beiden Evolventen bzw. der Evolvente bestimmt werden. Alternativ kann auch hier nur die Lage einer Evolvente bestimmt werden und die zweite, wenn benötigt, über die Zahndicke.
- Aus der Lage der ersten Verzahnung wird gemäß der Vorgabe die Lage der zweiten Verzahnung berechnet.
- Gemäß der so ermittelten Solllage der zweiten Verzahnung wird die Kinematik für ihre Fertigung mit demselben oder einem anderen Werkzeug berechnet. Wird mit einem anderen Werkzeug gefertigt, muss dessen Lage bekannt sein. Diese kann beispielsweise messtechnisch bestimmt werden oder aus der Fertigung in der Maschine (Abrichten) bekannt sein. Alternativ kann sie durch eine Nut in der Werkzeugaufnahme bestimmt sein.
- Weitere Verzahnungen werden, wenn nötig, analog gefertigt

Abschließend lassen sich die möglichen Anwendungen des erfindungsgemäßen Verfahrens wie folgt zusam-menfassen:

- Bestimmung der Lage ($\eta_{bl1}$ und $\eta_{br1}$) der linken und rechten Evolventen mit dem Werkzeug, wobei die beiden Verzahnungen nicht miteinander kämmen müssen, aber können. Hierzu muss die exakte Lage der Evolventen ($\eta_{bl2}$ und $\eta_{br2}$) des Werkzeugs bekannt sein. Diese kann bekannt sein durch:

  ◦ Ein entsprechend gefertigtes und aufgenommenes Werkzeug,
  ◦ Aus dem Abrichtprozess in der Maschine,
  ◦ Durch Vermessen mit einem Messsystem,
  ◦ Durch Vermessen mit einem Masterrad wie unten beschrieben.

Die Verzahnungen können von Evolvententyp 1-4 sein. Sowohl das Werkzeug als auch das Werkstück können bekannte Modifikationen/Profilabweichungen/Profilfehler aufweisen. Bei Werkzeugen mit definierter Schneide kann dies im nicht-laufenden Zustand erfolgen, wenn die Lage der Stollen bekannt ist.

- Bestimmung der Lage ($\eta_{bl2}$ und $\eta_{br2}$) der linken und rechten Evolventen des Werkzeugs an einem vermessenen Zahnrad (Masterrad). Dessen Lage kann zuvor mit einem anderen Messsystem in der Maschine bestimmt worden sein.

- Bestimmung der Zahndicke eines Werkzeuges an einem Zahnrad (Masterrad). Dieses kann zuvor in einer externen Messmaschine vermessen worden sein. Das kann zum Beispiel genutzt werden, um bei einem nachgeschärften Werkzeug (Wälzfräser, Schälrad) den Zustand zu bestimmen.

- Überprüfung eines Werkzeugs auf Profilfehler an einem Masterrad

- Ausrichten der Evolventen des Werkstücks bei der Fertigung an einer Referenzrichtung. Dies kann unter anderem bestimmt worden sein durch:

    ◦ Messen an einer Nut, Bohrung, vorverzahnten Verzahnung (evtl. mit Aufmaß-Analyse), einer anderen Verzahnung, mit einem Messtaster oder ähnlichem,
    ◦ Lagebestimmung mit Werkzeug in der vorverzahnten Verzahnung (evtl. mit Aufmaß-Analyse), in einer anderen Verzahnung, wobei diese nicht notwendigerweise miteinander kämmen müssen, an einem anderen nicht verzahnten (nicht evolventischen) Teil des Werkstücks.
    - Einmitten des Werkzeuges für die Verzahnnachbearbeitung. Einmitten ist eine Kombination aus Lagebestimmung und Ausrichtung der Evolventen.
    - Einmitten des Werkzeugs mit veränderter Werkzeuggeometrie und/oder veränderter Herstellkinematik

**Patentansprüche**

1. Verfahren zur Lagebestimmung der Evolventen eines vorverzahnten Werkstückes innerhalb einer Verzahnmaschine unter Verwendung eines verzahnten Werkzeuges, wobei das Werkstück und/oder Werkzeug eine asymmetrische zylindrische und/oder konische Verzahnung aufweisen, mit den folgenden Verfahrensschritten:

    - Erzeugen einer ersten Relativbewegung zwischen Werkstück und Werkzeug, Detektieren der resultierenden ersten Berührung zwischen einer ersten Zahnflanke des Werkzeuges und einer ersten Zahnflanke des Werkstückes und Erfassen eines ersten Koordinatensatzes zur Darstellung der Relativbewegung von Werkstück und Werkzeug,
    - Erzeugen einer zweiten Relativbewegung zwischen Werkstück und Werkzeug, Detektieren der resultierenden zweiten Berührung zwischen einer zweiten Zahnflanke des Werkzeuges und einer zweiten Zahnflanke des Werkstückes und Erfassen eines zweiten Koordinatensatzes zur Darstellung der Relativbewegung von Werkstück und Werkzeug,
    - Bestimmung der Drehwinkel, der Vorschübe, des Achsabstandes und des Achskreuzwinkels von Werkzeug und Werkstück basierend auf dem ersten und zweiten Koordinatensatz und Berechnung der Lage der Evolventen auf Grundlage der Drehwinkel, der Vorschübe, des Achsabstandes und des Achskreuzwinkels.

2. Verfahren nach Anspruch 1, **dadurch gekennzeichnet, dass** die Drehwinkel, die Vorschübe, der Achsabstand und der Achskreuzwinkel durch Gleichsetzen einer kinematischen Kette, die die relative Lage zwischen Werkstück und Werkzeug beschreibt, mit einer Transformation aus den erfassten Maschinenkoordinaten bestimmt werden, dass vorzugsweise die relative Lage der Evolvente der linken und rechten Zahnflanke des Werkstückes zueinander berechnet wird, d.h. die Summe aus linkem und rechtem Grundlückenhalbwinkel berechnet wird, die die Zahndicke eines Werkstückzahnes darstellt und dass besonders vorzugsweise die absolute Lage der Mitte eines Zahns bzw. einer Lücke eines Werkstückes, d.h. die Differenz der Grundlückenhalbwinkel der linken und rechten Flanke des Werkstückes und/oder die absolute Lage der linken und rechten Evolvente eines Werkstückzahnes, d.h. der Grundlückenhalbwinkel für die linke und/oder rechte Flanke des Werkstückes berechnet wird, wobei gegebenenfalls wahlweise auch Modifikationen der linken und/oder rechten Evolvente des Werkstückes und/oder des Werkzeuges bei der Lagebestimmung berücksichtigt werden können.

3. Verfahren nach einem der vorhergehenden Ansprüche, **dadurch gekennzeichnet, dass** Werkstück und Werkzeug ein Schraubwälzgetriebe bilden.

4. Verfahren nach einem der vorhergehenden Ansprüche, **dadurch gekennzeichnet, dass** das Verfahren unabhängig davon ausführbar ist, ob Werkstück und Werkzeug miteinander kämmen.

5. Verfahren nach einem der vorhergehenden Ansprüche, **dadurch gekennzeichnet, dass** unter Berücksichtigung der Lagebestimmung der Evolventen das Werkzeug für die nachfolgende Verzahnbearbeitung eingemittet wird.

6. Verfahren nach einem der vorhergehenden Ansprüche, **dadurch gekennzeichnet, dass** das Verfahren wiederholt durchgeführt wird, wobei die Messwiederholungen mit identischen und/oder abweichenden Berührpunkten zwischen Werkzeug und Werkstück auf identischen und/oder verschiedenen Zahnlücken/Zähnen/Gängen des Werkzeugs und/oder des Werkstücks wiederholt werden, und wobei die Vielzahl an Messwiederholungen zur Reduzierung von Messungenauigkeiten statistisch ausgewertet und/oder für eine Aufmaßanalyse und/oder eine Profil-/Flankenmessung und/oder eine Teilungsmessung und/oder eine Zahndickenmessung verwendet wird, wobei vorzugsweise unter Berücksichtigung einer vorangegangenen Aufmaßanalyse das Werkzeug derart eingemittet wird, so dass der Abtrag in Normalenrichtung auf der linken und rechten Flanke des Werkstückes identisch oder nahezu identisch ist bzw. gezielt eine Abtragsverteilung eingestellt wird.

7. Verfahren nach einem der vorhergehenden Ansprüche, **dadurch gekennzeichnet, dass** das Verfahren in analoger Weise zur Lagebestimmung der Evolventen und/oder der Zahndickenbestimmung eines verzahnten Werkzeugs durchführbar ist.

8. Verfahren nach einem der vorhergehenden Ansprüche, **dadurch gekennzeichnet, dass** bei Verwendung eines Werkzeuges mit definierter Schneide Bewegungsachsen des Werkzeugs und/oder des Werkstücks, vorzugsweise der Drehwinkel und/oder der Vorschub des Werkzeuges und/oder des Werkstückes, in Kenntnis der Lage ein oder mehrerer Stollen des Werkzeuges vorab ausgerichtet werden, so dass der oder die Berührungspunkte zwischen Werkstück und Werkzeug im Bereich einer definierten Schneide, d.h. auf der Hüllverzahnung liegen.

9. Verfahren nach einem der vorhergehenden Ansprüche, **dadurch gekennzeichnet, dass** zwischen der ersten und zweiten Berührung wenigstens zwei Achsen des Werkzeuges und/oder des Werkstückes verfahren werden, insbesondere der Vorschub und der Drehwinkel des Werkstückes und/oder Werkzeuges, oder alternativ nur der Achskreuzwinkel verstellt wird, insbesondere durch eine Schwenkbewegung des Werkzeuges und/oder des Werkstückes.

10. Verfahren nach einem der vorhergehenden Ansprüche, **dadurch gekennzeichnet, dass** ein Einfädelsensor für eine Serienproduktion eines Werkstückes bestimmten Typs angelernt wird, indem bei einem ersten Werkstück die Lage der Evolventen mittels des Verfahrens exakt vermessen wird und anschliessend mittels des Einfädelsensors dessen Lage mit Bezug zu einer Referenzlage ermittelt und gespeichert wird, wobei nachfolgende Werkstücke mittels des Einfädelsensors in dieselbe Lage verbracht werden können.

11. Verfahren nach einem der vorhergehenden Ansprüche, **dadurch gekennzeichnet, dass** für die erste und/oder zweite Relativbewegung genau eine physikalische Achse der Verzahnmaschine verfahren wird, sofern das Verfahren der genau einen physikalischen Achse nicht nur eine Änderung entweder genau eines Vorschubs oder genau eines Drehwinkels genau eines der beiden Zahnräder bewirkt.

12. Verfahren zum lageorientierten Fertigen eines Werkstückes auf einer Verzahnmaschine, wobei ausgehend von einer separaten Soll-Vorgabe des rechten und/oder linken Grundlückenhalbwinkels und/oder einer Soll-Vorgabe der Lage der Mitte eines Zahnes oder einer Lücke für das zu fertigende Werkstück bezüglich einer Referenzrichtung ein oder mehrere Sollwerte für den oder die Drehwinkel und/oder den oder die Vorschübe des Werkzeuges und/oder des Werkstückes und/oder des Achskreuzwinkels und/oder Achsabstandes der beiden Verzahnungen bestimmt werden, wobei die Berechnung der ein oder mehreren Sollwerte durch eine Umkehr der Berechnungsschritte des Verfahrens nach einem der vorhergehenden Ansprüche 1 bis 11 zur Berechnung der Lage der Evolventen erfolgt, wobei vorzugsweise die Referenzrichtung für die Grundlückenhalbwinkel vorzugsweise durch Messen mit einem Messtaster bestimmt wird und wobei weiter vorzugsweise die Berechnung des oder der Sollwerte für den oder die Drehwinkel, den oder die Vorschübe, den Achsabstand und der Achskreuzwinkel mittels einer kinematischen Kette erfolgt, die die relative Lage zwischen Werkstück und Werkzeug beschreibt.

13. Verfahren nach Anspruch 12, **dadurch gekennzeichnet, dass** mittels des Verfahrens mindestens zwei Verzahnungen eines Werkstückes während einer Werkstückaufspannung zueinander lageorientiert gefertigt werden, indem das Verfahren zunächst für eine erste Verzahnung mit einer vorgegebenen Referenzrichtung ausgeführt wird und für wenigstens eine weitere Verzahnung wiederholt wird, wobei aus der Lage der ersten Verzahnung die Lage der zweiten Verzahnung berechnet wird.

14. Verfahren nach einem der Ansprüche 12 oder 13, **dadurch gekennzeichnet, dass** das Verfahren in Kombination mit dem Verfahren gemäß einem der Ansprüche 1 bis 11 ausgeführt wird.

15. Verzahnmaschine mit einer CNC-Steuerung ausgebildet zur Durchführung des Verfahrens gemäß einem der vorhergehenden Ansprüche 1 bis 11 und/oder gemäß einem der vorhergehenden Ansprüche 12 bis 14.

**Claims**

1. Method for the location determination of the involutes of a pre-gear cut workpiece within a gear-cutting machine using a gear-cut tool, wherein the workpiece and/or the tool has/have an asymmetric cylindrical and/or conical gear(s), comprising the following method steps:

   - generating a first relative movement between the workpiece and the tool, detecting the resulting first contact between a first tooth flank of the tool and a first tooth flank of the workpiece and detecting a first set of coordinates for representing the relative movement of the workpiece and the tool,
   - generating a second relative movement between the workpiece and the tool, detecting the resulting second contact between a second tooth flank of the tool and a second tooth flank of the workpiec and detecting a second set of coordinates for representing the relative movement of the workpiece and the tool,
   - determining the angles of rotation, the feeds, the axial distance and the crossed-axes angle of the tool and the workpiece based on the first and second sets of coordinates and calculating the location of the involutes on the basis of the angles of rotation, the feeds, the axial distance and the crossed-axes angle.

2. Method in accordance with claim 1, **characterized in that** the angles of rotation, the feeds, the axial distance and the crossed-axes angle are determined by equating a kinematic chain which describes the relative location between the workpiece and the tool with a transformation from the detected machine coordinates, **in that** preferably the relative location of the involute of the left and right tooth flanks of the workpiece with respect to one another is calculated, i.e. the sum of the left and right base gap half-angles is calculated which represents the tooth thickness of a workpiece tooth, and **in that** particularly preferably the absolute location of the center of a tooth or of a gap of a workpiece is calculated, i.e. the different of the base gap half angle of the left and right flanks of the workpiece, abd/or the absolute position of the left and right involute of a workpiece tooth is calculated, i.e. the base gap half-angle for the left and/or right flank(s) of the workpiece is calculated, wherein modifications of the left and/or right involute(s) of the workpiece and/or of the tool can selectively be taken into account in the location determination, as required.

3. Method in accordance with one of the preceding claims, **characterized in that** the workpiece and the tool form a helical rolling type gear transmission.

4. Method in accordance with one of the preceding claims, **characterized in that** the method can be carried out independently of whether the workpiece and the tool mesh with one another.

5. Method in accordance with one of the preceding claims, **characterized in that** the tool for the following gear-cutting machining is centered while taking account of the location position of the involutes.

6. Method in accordance with one of the preceding claims, **characterized in that** the method is carried out repeatedly, wherein the measurement repeats are repeated with identical and/or different contact points between the tool and the workpiece on identical and/or different tooth gaps/teeth/helices of the tool and/or of the workpiece, and wherein the plurality of measurement repeats is statistically evaluated for reducing measuring inaccuracies and/or is used for an allowance analysis and/or for a profile/flank measurement and/or for a pitch measurement and/or for a tooth thickness measurement, wherein preferably the tool is centered while taking account of a preceding allowance analysis of the tool such that the stock removal is identical or almost identical in the normal direction on the left and right flanks of the workpiece or a removal distribution is directy set.

7. Method in accordance with one of the preceding claims, **characterized in that** the method can be carried out in an analog manner for the location determination of the involutes and/or for the tooth thickness determination of a gear-cut tool.

8. Method in accordance with one of the preceding claims, **characterized in that** on a use of a tool having a defined edge, movement axes of the tool and/or of the workpiece, preferably the angle of rotation and/or the feed of the tool and/or of the workpiece, are aligned in advance with knowledge of the location of one or more lands of the tool so that the contact point(s) between the workpiece and the tool lie(s) in the region of a defined edge, i.e. on the envelope gear.

9. Method in accordance with one of the preceding claims, **characterized in that** between the first contact and the second contact at least two axes of the tool and/or of the workpiece are traveled, in particular the feed and the angle of rotation of the workpiece and/or of the tool, or alternatively only the crossed-axes angle is adjusted, in particular by a pivot movement of the tool and/or of the workpiece.

10. Method in accordance with one of the preceding claims, **characterized in that** an insertion sensor is taught for a mass production of a workpiece of a certain type **in that** with a first workpiece, the location of the involute is exactly measured by means of the method and subsequently its position is determined and stored with reference to a reference location using the insertion sensor, wherein subsequent workpieces can be brought into the same location using the insertion sensor.

11. Method in accordance with one of the preceding claims, **characterized in that** exactly one physical axle of the gear-cutting machine is traveled for the first and/or second relative movement(s) provided that the traveling of the exactly one physical axle not only effects a change of either exactly one feed or of exactly one angle of rotation of exactly one of the two gear wheels.

12. Method for the location-orientated production of a workpiece on a gear-cutting machine, wherein, starting from a separate desired default of the right and/or left base gap half-angle and/or of a desired default of the location of the center of a tooth or of a gap for the workpiece to be produced with respect to a reference direction, one or more desired values are determined for the angle(s) of rotation and/or for the feed(s) of the tool and/or of the workpiece and/or for the crossed-axes angle and/or the axial distance of the two gears, wherein the calculation of the one or more desired values takes place by a reversal of the calculation steps of the method in accordance with one of the preceding claims 1 to 11 for calculating the location of the involutes, wherein preferably the reference direction for the base gap half-angle is preferably determined by measuring using a measurement probe, and wherein further preferably the calculation of the desired value or values for the angle(s) of rotation, for the feed(s), for the axial distance and for the crossed-axes angle takes place using a kinematic chain which describes the relative location between the workpiece and the tool.

13. Method in accordance with claim 12, **characterized in that** at least two gears of a workpiece are produced with location orientation with respect to one another during a workpiece clamping by means of the method **in that** the method is first carried out for a first gear having a predefined reference direction and is repeated for at least one further gear, with the location of the second gear being calculated from the location of the first gear.

14. Method in accordance with one of the claims 12 or 13, **characterized in that** the method is carried out in combination with the method in accordance with one of the claims 1 to 11.

15. Gear-cutting machine having a CNC control configured for carrying out the method in accordance with one of the preceding claims 1 to 11 and/or in accordance with one of the preceding claims 12 to 14.

**Revendications**

1. Procédé de détermination de la position de développantes d'une ébauche de pièce dans une machine à tailler les engrenages au moyen d'un outil denté, la pièce et/ou l'outil comportant une denture asymétrique cylindrique et/ou conique, comprenant les étapes de procédé suivantes :

   - génération d'un premier mouvement relatif entre la pièce et l'outil, détection du premier contact obtenu entre un premier flanc de dent de l'outil et un premier flanc de dent de la pièce et acquisition d'un premier jeu de coordonnées pour la représentation du mouvement relatif de la pièce et de l'outil,
   - génération d'un second mouvement relatif entre la pièce et l'outil, détection du second contact obtenu entre un second flanc de dent de l'outil et un second flanc de dent de la pièce et acquisition d'un second jeu de coordonnées pour la représentation du mouvement relatif de la pièce et de l'outil,
   - détermination des angles de rotation, des mouvements d'avance, de l'entraxe et de l'angle de croisement des axes de l'outil et de la pièce en fonction du premier et du second jeu de coordonnées et calcul de la position des développantes sur la base des angles de rotation, des mouvements d'avance, de l'entraxe et de l'angle de croisement des axes.

2. Procédé selon la revendication 1, **caractérisé en ce que** les angles de rotation, les mouvements d'avance, l'entraxe et l'angle de croisement des axes sont déterminés par la mise au même niveau d'une chaîne cinématique, qui décrit la position relative entre la pièce et l'outil, avec une transformée des coordonnées de machine acquises, **en ce que** la position relative des développantes des flancs gauche et droit de la dent de la pièce l'une par rapport à l'autre est de préférence calculée, c'est-à-dire que la somme des demi-angles d'intervalle de fond gauche et droit est calculée, laquelle représente l'épaisseur de dent d'une dent de la pièce et **en ce que**, de manière particulièrement préférée, la position absolue du centre d'une dent ou d'un intervalle d'une pièce, c'est-à-dire la différence entre les demi-angles d'intervalle de fond des flancs gauche et droit de la pièce et/ou la position absolue des développantes gauche et droite d'une dent de pièce, c'est-à-dire le demi-angle d'intervalle de fond pour le flanc gauche et/ou le flanc droit de la pièce est calculée, des modifications de la développante gauche et/ou droite de la pièce et/ou de l'outil pouvant, facultativement, être aussi prises en compte le cas échéant lors de la détermination de la position.

3. Procédé selon l'une des revendications précédentes, **caractérisé en ce que** la pièce et l'outil forment un engrenage à axes non concourants.

4. Procédé selon l'une des revendications précédentes, **caractérisé en ce que** le procédé peut être exécuté indépendamment de l'engrènement ou non de la pièce et de l'outil l'un dans l'autre.

5. Procédé selon l'une des revendications précédentes, **caractérisé en ce que** l'outil est centré pour le taillage de dent suivant en tenant compte de la détermination de la position des développantes.

6. Procédé selon l'une des revendications précédentes, **caractérisé en ce que** le procédé est exécuté plusieurs fois, les mesures répétées avec des points de contact identiques et/ou différents entre l'outil et la pièce étant répétées sur des intervalles de dent / des dents / des pas identiques et/ou différents de l'outil et/ou de la pièce, et la pluralité de mesures répétées étant évaluée statistiquement pour réduire les imprécisions de mesure et/ou utilisée pour une analyse de surépaisseur et/ou une mesure de profil/flanc et/ou une mesure de pas et/ou une mesure d'épaisseur de dent, l'outil étant de préférence centré en tenant compte d'une analyse de surépaisseur précédente de telle manière que l'enlèvement dans le sens vertical est identique ou presque identique sur les flancs gauche et droit de la pièce ou qu'une distribution de l'enlèvement est réglée de manière précise.

7. Procédé selon l'une des revendications précédentes, **caractérisé en ce que** le procédé peut être exécuté de manière analogue pour la détermination de la position des développantes et/ou pour la détermination de l'épaisseur de dent d'un outil denté.

8. Procédé selon l'une des revendications précédentes, **caractérisé en ce que**, lors de l'utilisation d'un outil avec une arête de coupe définie, des axes de déplacement de l'outil et/ou de la pièce, de préférence l'angle de rotation et/ou le mouvement d'avance de l'outil et/ou de la pièce, sont orientés préalablement en connaissance de la position d'une ou de plusieurs cannelures de l'outil, de telle sorte que le ou les points de contact entre la pièce et l'outil se trouvent dans la zone d'une arête de coupe définie, c'est-à-dire sur la denture générée.

9. Procédé selon l'une des revendications précédentes, **caractérisé en ce que**, entre le premier et le second contact, l'outil et/ou la pièce sont déplacés sur au moins deux axes, en particulier le mouvement d'avance et l'angle de rotation de la pièce et/ou de l'outil, ou de manière alternative, uniquement l'angle de croisement des axes est réglé, en particulier par un mouvement pivotant de l'outil et/ou de la pièce.

10. Procédé selon l'une des revendications précédentes, **caractérisé en ce qu'**un apprentissage d'un capteur d'insertion est effectué pour une production en série d'une pièce d'un type précis, en mesurant exactement la position des développantes pour une première pièce au moyen du procédé, puis en déterminant et enregistrant sa position par rapport à une position de référence au moyen du capteur d'insertion, les pièces suivantes pouvant être amenées dans la même position au moyen du capteur d'insertion.

11. Procédé selon l'une des revendications précédentes, **caractérisé en ce que**, pour le premier et/ou le second mouvement relatif, un déplacement est effectué sur strictement un axe physique de la machine à tailler les engrenages, dans la mesure où le déplacement sur le strictement un axe physique n'entraîne pas seulement une modification soit strictement d'un mouvement d'avance soit strictement d'un angle de rotation de strictement une des deux roues dentées.

12. Procédé pour la production en fonction de la position d'une pièce sur une machine à tailler les engrenages, dans lequel, à partir d'une consigne séparée du demi-angle d'intervalle de fond droit et/ou gauche et/ou d'une consigne de la position du centre d'une dent ou d'un intervalle pour la pièce à produire par rapport à un sens de référence, une ou plusieurs valeurs de consigne pour le ou les angles de rotation et/ou le ou les mouvements d'avance de l'outil et/ou de la pièce et/ou pour l'angle de croisement des axes et/ou l'entraxe des deux dentures sont déterminées, le calcul de la ou des valeurs de consigne étant effectué par une inversion des étapes de calcul du procédé selon l'une des revendications précédentes 1 à 11 pour le calcul de la position des développantes, le sens de référence pour les demi-angles d'intervalle de fond étant de préférence déterminé de préférence par une mesure avec un palpeur de mesure et le calcul de la ou des valeurs de consigne pour le ou les angles de rotation, le ou les mouvements d'avance, l'entraxe et l'angle de croisement des axes étant effectué plus préférentiellement au moyen d'une chaîne cinématique qui décrit la position relative entre la pièce et l'outil.

13. Procédé selon la revendication 12, **caractérisé en ce que**, au moyen du procédé, au moins deux dentures d'une pièce sont produites, avec un seul serrage de pièce, en fonction de la position de l'une par rapport à l'autre, en exécutant le procédé d'abord pour une première denture avec un sens de référence prédéfini et en le répétant pour au moins une autre denture, la position de la seconde denture étant calculée à partir de la position de la première denture.

14. Procédé selon l'une des revendications 12 ou 13, **caractérisé en ce que** le procédé est exécuté en combinaison avec le procédé selon l'une des revendications 1 à 11.

15. Machine à tailler les engrenages, dotée d'une commande CNC, réalisée pour l'exécution du procédé selon l'une des revendications 1 à 11 et/ou selon l'une des revendications 12 à 14.

# Figur 1

# Figur 2

LF

f(w,b)

$$\eta_{bl} - \frac{f}{r_{bl}}$$

1

$\eta_{bl}$

## Figur 3

## Figur 4

Figur 5

Figur 6

# Figur 7

Figur 8